# EUROPEAN PATENT SPECIFICATION

(11) **EP 4 625 862 B1**
(45) Date of publication and mention of the grant of the patent: **16.09.2026**
(21) Application number: 24744369.0
(22) Date of filing: 18.01.2024
(51) Int. Cl.: H04L 1/1812, H04L 1/1822, H04L 1/1867, H04L 67/131

(54) **DATA TRANSMISSION METHOD, AND RELATED APPARATUS**
DATENÜBERTRAGUNGSVERFAHREN UND ZUGEHÖRIGE VORRICHTUNG
PROCÉDÉ DE TRANSMISSION DE DONNÉES ET APPAREIL ASSOCIÉ

(30) Priority: 20.01.2023 CN 202310125232
(43) Date of publication of application: 01.10.2025
(60) Divisional application: 26198075.9
(73) Proprietor: Huawei Technologies Co., Ltd., Shenzhen, Guangdong 518129 (CN)
(72) Inventor: TAN, Zhiyuan, Shenzhen, Guangdong 518129 (CN); CAO, Youlong, Shenzhen, Guangdong 518129 (CN); QIN, Yi, Shenzhen, Guangdong 518129 (CN)
(74) Representative: Isarpatent
(86) International application number: PCT/CN2024/073089
(87) International publication number: WO 2024/153199

(56) References cited:
- WO-A1-2021/062870
- US-A1- 2022 217 759
- US-A1- 2022 255 670
- HUAWEI ET AL: "Scheduling of multiple transport blocks", vol. RAN WG1, no. Reno, USA; 20191118 - 20191122, 25 November 2019 (2019-11-25), XP051830684, Retrieved from the Internet <URL:https://ftp.3gpp.org/tsg_ran/WG1_RL1/TSGR1_99/Docs/R1-1913403.zip R1-1913403.docx> [retrieved on 20191125]
- ZTE: "Summary on Multiple TB scheduling enhancement for NB-IoT", 27 February 2019 (2019-02-27), pages 1 - 14, XP051600952, Retrieved from the Internet <URL:http://www.3gpp.org/ftp/tsg%5Fran/WG1%5FRL1/TSGR1%5F96/Docs/R1%2D1903257%2Ezip>
- ERICSSON: "Scheduling of multiple DL/UL transport blocks in NB-IoT", 3GPP DRAFT; R1-1812129 SCHEDULING OF MULTIPLE DL-UL TRANSPORT BLOCKS IN NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Spokane, USA; 20181112 - 20181116, 3 November 2018 (2018-11-03), Mobile Competence Centre ; 650, route des Lucioles ; F-06921 Sophia-Antipolis Cedex ; France , XP051478254
- ERICSSON: "Scheduling of multiple DL/UL transport blocks in NB-IoT", 3GPP DRAFT; R1-1903893 SCHEDULING OF MULTIPLE DL-UL TRANSPORT BLOCKS IN NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi’an, China; 20190408 - 20190412, 29 March 2019 (2019-03-29), Mobile Competence Centre ; 650, route des Lucioles ; F-06921 Sophia-Antipolis Cedex ; France , XP051691138
- NOKIA, NOKIA SHANGHAI BELL: "Scheduling of multiple DL/UL transport blocks", 3GPP DRAFT; R1-1904178, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi’an, China; 20190408 - 20190412, 29 March 2019 (2019-03-29), Mobile Competence Centre ; 650, route des Lucioles ; F-06921 Sophia-Antipolis Cedex ; France , XP051691322
- HUAWEI, HISILICON: "Scheduling of multiple transport blocks", 3GPP DRAFT; R1-1911919, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 9 November 2019 (2019-11-09), Mobile Competence Centre ; 650, route des Lucioles ; F-06921 Sophia-Antipolis Cedex ; France , XP051823101

## Description

Priority is claimed to Chinese Patent Application No. 202310125232.9, filed with the China National Intellectual Property Administration on January 20, 2023 and entitled "DATA TRANSMISSION METHOD AND RELATED APPARATUS".

### TECHNICAL FIELD

This specification generally relates to the communication field, and the invention in particular relates to a data transmission method, a communication apparatus, a computer readable storage medium, and a computer program product.

### BACKGROUND

Extended reality (XR) is a general term for various reality-related technologies, specifically including virtual reality (VR), augmented reality (AR), and mixed reality (MR). XR uses hardware devices and a variety of technical means to integrate virtual content with real-world scenes, providing people with immersive sensory experience, including visual, auditory, tactile, and other experience.

In an actual transmission process, uplink transmission is mainly transmission of tactile data. In a current new radio (NR) system, downlink control information (DCI) used for uplink scheduling supports carrying a configuration parameter corresponding to one transport block (TB). In other words, only one TB can be scheduled, and the TB is either used to carry retransmitted data or used to carry initially transmitted (or newly transmitted) data, causing low flexibility of scheduling the TB, and affecting user experience. For example, in some scenes requiring retransmission of tactile data, a network device may schedule retransmitted data by using DCI. In this case, a terminal device may first transmit the retransmitted data, and some initially transmitted data needs to wait in a queue. Consequently, the initially transmitted data may become invalid due to a timeout, affecting user experience.

The standard change proposal by HUAWEI ET AL: "Scheduling of multiple transport blocks", 3GPP DRAFT; R1-1913403, 3RD GENERATION PARTNERSHIP PROJECT (3GPP), vol. RAN WGl, no. Reno, USA; 20191118 - 20191122 25 November 2019 (2019-11-25) relates to technological background art for the scheduling of transport blocks.

The standard change proposal by ZTE: "Summary on Multiple TB scheduling enhancement for NB-loT", 3GPP DRAFT; R1-1903257, 3RD GENERATION PARTNERSHIP PROJECT (3GPP), 27 February 2019 (2019-02-27), pages 1-14 relates to technological background art for multiple TB scheduling.

### SUMMARY

Thre object of the present invention is to provide a data transmission method, a communication apparatus, a computer readable storage medium, and a computer program product, to improve flexibility of scheduling a TB by a network device and improve user experience. This object is solved by the attached independent claims and further advantageous embodiments and improvements are listed in the attached dependent claims.

According to a first aspect, this application provides a data transmission method. The method is performed by a terminal device, or is performed by a component (for example, a chip or a chip system) configured in a terminal device, or is implemented by a logical module or software that can implement all or a part of functions of a terminal device.

The method includes: receiving DCI from a network device, where the DCI carries configuration parameters corresponding to two TBs, types of the two TBs include an initially transmitted TB and a retransmitted TB, the initially transmitted TB is used to carry initially transmitted data, and the retransmitted TB is used to carry retransmitted data; determining a type and a quantity of scheduled TBs based on the DCI; and sending, to the network device, the quantity of TBs corresponding to the type.

In the foregoing technical solution, the DCI may carry the configuration parameters corresponding to the retransmitted TB and the initially transmitted TB. In this way, the network device can flexibly schedule the retransmitted TB and/or the initially transmitted TB by using the DCI. Therefore, the network device can schedule the retransmitted TB and the initially transmitted TB based on different requirements when both the retransmitted data and the initially transmitted data need to be transmitted. When the retransmitted data does not need to be transmitted, the initially transmitted TB may be scheduled, but the retransmitted TB is not scheduled. When the initially transmitted data does not need to be transmitted, the retransmitted TB may be scheduled, but the initially transmitted TB is not scheduled. In this way, transmission of the retransmitted data is not delayed due to waiting for transmission of the initially transmitted data, and a problem of decoding failure caused by untimely transmission of the retransmitted data can be avoided; and transmission of the initially transmitted data is not delayed due to waiting for transmission of the retransmitted data either, and a problem that the initially transmitted data becomes invalid due to a timeout can be avoided. In general, the transmission delay is shortened, transmission performance is improved, and user experience is improved.

It should be understood that the retransmitted TB is used to carry retransmitted data, and that the initially transmitted TB is used to carry initially transmitted data. In other words, types of data that the two TBs can be used to carry include initially transmitted data and retransmitted data. The terminal device may send, to the network device based on the type of data scheduled by the network device, the foregoing quantity of TBs corresponding to the foregoing type of data.

It should be further understood that the DCI includes fields corresponding to the two TBs, and that a field corresponding to each TB includes a configuration parameter corresponding to the TB. In addition, although the DCI includes the fields corresponding to the two TBs, it does not indicate that the two TBs are scheduled each time scheduling is performed. The type and the quantity of the scheduled TBs need to be determined based on the fields in the DCI.

The terminal device determines the type and the quantity of the scheduled TBs in one of the following manners:
Manner 1: The configuration parameters include hybrid automatic repeat request (hybrid automatic repeat request, HARQ) process numbers, and the DCI carries one new data indicator (new data indicator, NDI) and two HARQ process numbers that are in one-to-one correspondence with the two TBs. The terminal device determines the type and the quantity of the scheduled TBs based on the NDI and the two HARQ process numbers.

In a possible design, when the NDI is not toggled and the two HARQ process numbers are inconsistent, the terminal device determines that the scheduled TBs are one initially transmitted TB and one retransmitted TB; when the NDI is toggled, the terminal device determines that the scheduled TB is one initially transmitted TB; or when the NDI is not toggled and the two HARQ process numbers are consistent, the terminal device determines that the scheduled TB is one retransmitted TB.

In another possible design, when the NDI is toggled and the two HARQ process numbers are inconsistent, the terminal device determines that the scheduled TBs are one initially transmitted TB and one retransmitted TB; when the NDI is not toggled, the terminal device determines that the scheduled TB is one retransmitted TB; or when the NDI is toggled and the two HARQ process numbers are consistent, the terminal device determines that the scheduled TB is one initially transmitted TB.

It may be understood that, in this application, NDI toggling means whether the NDI changes compared with a previous NDI. For example, compared with the previous NDI, if the NDI changes from 1 to 0, or from 0 to 1, it indicates that the NDI is toggled; or compared with the previous NDI, if both the NDI and the previous NDI are 1, or both the NDI and the previous NDI are 0, it indicates that the NDI is not toggled.

Manner 2: The configuration parameters include NDIs, and the DCI carries two NDIs that are in one-to-one correspondence with the two TBs; and the terminal device determines the type and the quantity of the scheduled TBs based on the two NDIs.

In a possible design, when one of the two NDIs is toggled and the other one of the two NDIs is not toggled, the terminal device determines that the scheduled TBs are one initially transmitted TB and one retransmitted TB; when neither of the two NDIs is toggled, determines that the scheduled TB is one retransmitted TB; or when the two NDIs are both toggled, determines that the scheduled TB is one initially transmitted TB.

With reference to the first aspect, in some possible implementations, the configuration parameters include modulation and coding schemes (modulation and coding scheme, MCS) and redundancy versions (redundancy version, RV), and the DCI carries MCSs and RVs that correspond to the two TBs.

Optionally, a quantity of bits occupied by the MCS is 0, 2, or 5, and a quantity of bits occupied by the RV is 1 or 2.

With reference to the first aspect, in some possible implementations, the method further includes: receiving a radio resource control (radio resource control, RRC) message from the network device, where the RRC message indicates an assignment ratio of transmission resources assigned by the network device to the terminal device, the assignment ratio is used to divide the transmission resources into N portions of resources, N is the quantity of the scheduled TBs, each of the N portions of resources is used to transmit one corresponding TB, and N is an integer greater than or equal to 2.

Optionally, the indication of the assignment ratio in the RRC message includes: respective proportions of the N portions of resources; or the indication of the assignment ratio in the RRC message includes: respective proportions of N-1 portions of resources in the N portions of resources.

The terminal device may divide the transmission resources into a plurality of portions of resources based on the assignment ratio indicated in the RRC message, and each portion of resources is used to transmit a corresponding TB. In other words, different TBs may occupy different resources. This helps improve data transmission efficiency, and further helps improve user service experience. The transmission resources include time domain resources and frequency domain resources. For example, the terminal device may divide time domain resources assigned by the network device to the terminal device into a plurality of portions, and different TBs occupy different time domain resources. For another example, the terminal device may divide frequency domain resources assigned by the network device to the terminal device into a plurality of portions, and different TBs occupy different frequency domain resources.

It may be understood that, in the foregoing solution, the DCI carries configuration parameters corresponding to two TBs, where the types of the two TBs include an initially transmitted TB and a retransmitted TB, and a maximum of two types of scheduled TBs are supported, that is, an initially transmitted TB and a retransmitted TB. However, this shall not constitute any limitation on this application. For example, the DCI may alternatively carry configuration parameters corresponding to three TBs, where types of the three TBs include a retransmitted TB, an initially transmitted TB without a retransmission opportunity, and an initially transmitted TB with a retransmission opportunity, and a maximum of three types of scheduled TBs are supported.

According to a second aspect, this application provides a data transmission method. The method is performed by a network device, or is performed by a component (for example, a chip or a chip system) configured in a network device, or is implemented by a logical module or software that can implement all or a part of functions of a network device.

The method includes: generating DCI used for uplink scheduling, where the DCI carries configuration parameters corresponding to two transport blocks TBs, types of the two TBs include an initially transmitted TB and a retransmitted TB, the initially transmitted TB is used to carry initially transmitted data, and the retransmitted TB is used to carry retransmitted data; and sending the DCI to a terminal device.

In the foregoing technical solution, the DCI may carry the configuration parameters corresponding to the retransmitted TB and the initially transmitted TB. In this way, the network device can flexibly schedule the retransmitted TB and/or the initially transmitted TB by using the DCI. Therefore, the network device can schedule the retransmitted TB and the initially transmitted TB based on different requirements when both the retransmitted data and the initially transmitted data need to be transmitted. When the retransmitted data does not need to be transmitted, the initially transmitted TB may be scheduled, but the retransmitted TB is not scheduled. When the initially transmitted data does not need to be transmitted, the retransmitted TB may be scheduled, but the initially transmitted TB is not scheduled. In this way, transmission of the retransmitted data is not delayed due to waiting for transmission of the initially transmitted data, and a problem of decoding failure caused by untimely transmission of the retransmitted data can be avoided; and transmission of the initially transmitted data is not delayed due to waiting for transmission of the retransmitted data either, and a problem that the initially transmitted data becomes invalid due to a timeout can be avoided. In general, the transmission delay is shortened, transmission performance is improved, and user experience is improved.

The configuration parameters include HARQ process numbers, the DCI carries one NDI and two HARQ process numbers that are in one-to-one correspondence with the two TBs, and the NDI and the two HARQ process numbers are determined based on a type and a quantity of TBs scheduled by the network device.

In a possible design, when the TBs scheduled by the network device are one initially transmitted TB and one retransmitted TB, the NDI is not toggled, and the two HARQ process numbers are inconsistent; when the TB scheduled by the network device is one initially transmitted TB, the NDI is toggled; or when the TB scheduled by the network device is one retransmitted TB, the NDI is not toggled, and the two HARQ process numbers are consistent.

In another possible design, when the TBs scheduled by the network device are one initially transmitted TB and one retransmitted TB, the NDI is toggled, and the two HARQ process numbers are inconsistent; when the TB scheduled by the network device is one retransmitted TB, the NDI is not toggled; or when the TB scheduled by the network device is one initially transmitted TB, the NDI is toggled, and the two HARQ process numbers are consistent.

Optionally, the configuration parameters include NDIs, the DCI carries two NDIs that are in one-to-one correspondence with the two TBs, and the two NDIs are determined based on a type and a quantity of TBs scheduled by the network device.

With reference to the second aspect, in some possible implementations, the configuration parameters include an MCS and an RV, and the DCI carries MCSs and RVs that correspond to the two TBs.

Optionally, a quantity of bits occupied by the MCS is 0, 2, or 5, and a quantity of bits occupied by the RV is 1 or 2.

With reference to the second aspect, in some possible implementations, the method further includes: sending an RRC message to the terminal device, where the RRC message indicates an assignment ratio of transmission resources assigned by the network device to the terminal device, the assignment ratio is used to divide the transmission resources into N portions of resources, N is the quantity of the TBs scheduled by the network device, each of the N portions of resources is used to transmit one corresponding TB, and N is an integer greater than or equal to 2.

Optionally, the indication of the assignment ratio in the RRC message includes: respective proportions of the N portions of resources; or the indication of the assignment ratio in the RRC message includes: respective proportions of N-1 portions of resources in the N portions of resources.

It may be understood that, in the foregoing solution, the DCI carries configuration parameters corresponding to two TBs, where the types of the two TBs include an initially transmitted TB and a retransmitted TB, and a maximum of two types of scheduled TBs are supported, that is, an initially transmitted TB and a retransmitted TB. However, this shall not constitute any limitation on this application. For example, the DCI may alternatively carry configuration parameters corresponding to three TBs, where types of the three TBs include a retransmitted TB, an initially transmitted TB without a retransmission opportunity, and an initially transmitted TB with a retransmission opportunity, and a maximum of three types of scheduled TBs are supported.

According to a third aspect, this application provides a communication apparatus. The apparatus implements the method according to any one of the first aspect or the possible implementations of the first aspect, or implement the method according to any one of the second aspect or the possible implementations of the second aspect. The apparatus includes corresponding units configured to implement the foregoing method. The units included in the apparatus may be implemented by software and/or hardware.

According to a fourth aspect, this application provides a communication apparatus. The apparatus includes a processor. The processor is coupled to a memory, and may be configured to execute a computer program in the memory, to implement the method according to any one of the first aspect or the possible implementations of the first aspect, or implement the method according to any one of the second aspect or the possible implementations of the second aspect.

Optionally, the apparatus further includes a communication interface, and the processor is coupled to the communication interface. The communication interface is configured to receive a signal from a communication apparatus other than the apparatus and transmit the signal to the processor, or send a signal from the processor to a communication apparatus other than the apparatus. For example, the communication interface may be a transceiver, a circuit, a bus, a module, or a communication interface of another type.

Optionally, the apparatus further includes a memory, and the processor is coupled to the memory. The memory is configured to store program instructions and data.

According to a fifth aspect, this application provides a communication system, including: a terminal device configured to perform the method according to any one of the first aspect or the possible implementations of the first aspect and a network device configured to perform the method according to any one of the second aspect or the possible implementations of the second aspect.

According to a sixth aspect, this application provides a computer-readable storage medium. The computer-readable storage medium stores a computer program or instructions. When the computer program or the instructions are executed, the method according to any one of the first aspect and the possible implementations of the first aspect is implemented, or the method according to any one of the second aspect and the possible implementations of the second aspect is implemented.

According to a seventh aspect, this application provides a computer program product. The computer program product includes instructions. When the instructions are run, the method according to any one of the first aspect and the possible implementations of the first aspect is implemented, or the method according to any one of the second aspect and the possible implementations of the second aspect is implemented.

According to an eighth aspect, this application provides a chip system. The chip system includes at least one processor, configured to support implementation of functions in any one of the first aspect and the possible implementations of the first aspect, or configured to support implementation of functions in any one of the second aspect and the possible implementations of the second aspect, for example, receiving or processing data in the foregoing method.

In a possible design, the chip system further includes a memory, the memory is configured to store program instructions and data, and the memory is located inside or outside the processor.

The chip system may include a chip, or may include a chip and another discrete component.

It should be understood that the third aspect to the eighth aspect of this application correspond to the technical solutions of the first aspect and the second aspect of this application, and that beneficial effects achieved in the aspects and corresponding feasible implementations are similar. Details are not described again.

### BRIEF DESCRIPTION OF DRAWINGS

FIG. 1 is a diagram of an arrival time of a tactile signal and an arrival time of a video signal according to an embodiment of this application;
FIG. 2 is a diagram of a transmission timeout of tactile data according to an embodiment of this application;
FIG. 3 is a diagram of a system architecture of a communication system to which a method according to an embodiment of this application is applicable;
FIG. 4 is a schematic flowchart of a data transmission method according to an embodiment of this application;
FIG. 5 is a diagram in which a network device schedules two TBs by using one piece of DCI according to an embodiment of this application;
FIG. 6 is a diagram in which a network device schedules three TBs by using one piece of DCI according to an embodiment of this application;
FIG. 7 is a diagram of a structure of a communication apparatus according to an embodiment of this application;
FIG. 8 is a diagram of another structure of a communication apparatus according to an embodiment of this application;
FIG. 9 is a diagram of a structure of a network device according to an embodiment of this application; and
FIG. 10 is a diagram of a structure of a terminal device according to an embodiment of this application.

### DESCRIPTION OF EMBODIMENTS

The following describes technical solutions of this application with reference to accompanying drawings.

To facilitate understanding of embodiments of this application, the following descriptions are first provided.

First, in embodiments of this application, the term "and/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between associated objects, but does not exclude an "and" relationship between the associated objects. A specific meaning represented by the character "/" may be understood with reference to the context. The term "one or more of the following items (pieces)" or an expression similar to the term indicates any combination of these items (pieces), including any combination of singular items (pieces) or plural items (pieces). For example, one or more of a, b, or c may represent a, b, c, a and b, a and c, b and c, or a, b, and c, where a, b, and c may be singular or plural.

Second, in embodiments of this application, the term "example", "for example", or the like represents an example, an illustration, or a description. Any embodiment or design scheme described with "example" or "for example" in this application should not be construed as being more preferred or advantageous than another embodiment or design scheme. To be precise, use of the term such as "example" or "for example" is intended to present a relative concept in a specific manner.

Third, a correspondence shown in each table in embodiments of this application may be configured. Values of information in the tables are merely examples, and other values may be configured. This is not limited in embodiments of this application. When a correspondence between the information and parameters is configured, not all the correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used.

The following describes in detail a communication system to which a method provided in embodiments of this application is applicable and a related network element.

The technical solutions provided in this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a wireless local area network (wireless local area network, WLAN), a long term evolution (long term evolution, LTE) system, an LTE frequency division duplex (frequency division duplex, FDD) system, an LTE time division duplex (time division duplex, TDD) system, a sidelink (sidelink) communication system, a universal mobile telecommunications system (universal mobile telecommunications system, UMTS), a worldwide interoperability for microwave access (worldwide interoperability for microwave access, WiMAX) communication system, a 5th generation (5th generation, 5G) mobile communication system, or a new radio access technology (new radio access technology, NR). The 5G mobile communication system may include non-standalone (non-standalone, NSA) networking and/or standalone (standalone, SA) networking.

The technical solutions provided in this application may be further applied to a future communication system, for example, a 6th generation (6th Generation, 6G) mobile communication system. This is not limited in this application.

Network elements in embodiments of this application include a network device and a terminal device.

The network device may be any device with a wireless transceiver function. The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, or may be a gNB or a transmission point (TRP or TP) in a 5G (such as NR) system, or one antenna panel or a group of antenna panels (including a plurality of antenna panels) of a base station in a 5G system, or may be a network node that constitutes a gNB or a transmission point, for example, a baseband unit (BBU), or a distributed unit (distributed unit, DU).

Alternatively, the network device may be a server, a wearable device, a vehicle-mounted device, or the like. This is not limited in this application.

In some deployments, a gNB may include a central unit (central unit, CU) and a DU. For example, the CU implements some functions of the gNB, and the DU implements some functions of the gNB. For example, the CU is responsible for processing a non-real-time protocol and a service, and implements functions of an RRC layer and a packet data convergence protocol (packet data convergence protocol, PDCP) layer, and the DU may include functions of a radio link control (radio link control, RLC) layer, a media access control (media access control, MAC) layer, and a physical (physical, PHY) layer.

For example, the DU may include upper-layer functions in the PHY layer. The upper-layer functions in the PHY layer may include a cyclic redundancy check (cyclic redundancy check, CRC) function, channel coding, rate matching, scrambling, modulation, and layer mapping. Alternatively, the upper-layer functions in the PHY layer may include cyclic redundancy check, channel coding, rate matching, scrambling, modulation, layer mapping, and precoding. Lower-layer functions in the PHY layer may be implemented by another network entity independent of the DU. The lower-layer functions in the PHY layer may include precoding, resource mapping, physical antenna mapping, and radio frequency functions. Alternatively, the lower-layer functions in the PHY layer may include resource mapping, physical antenna mapping, and radio frequency functions. Division of the upper-layer functions and lower-layer functions in the PHY layer is not limited in embodiments of this application. When the lower-layer functions in the PHY layer may be implemented by another network entity independent of the DU, that the DU sends data or information to another communication apparatus (for example, a terminal device or a core network device) may be understood as: The DU performs functions of the RLC layer and the MAC layer, and some functions of the PHY layer. For example, after the DU completes the functions of the RLC layer and the MAC layer, and cyclic redundancy check, channel coding, rate matching, scrambling, modulation, and layer mapping, the network entity that is independent of the DU and that performs the lower-layer functions in the PHY layer performs remaining functions of mapping and sending on a physical resource.

The network device provides a service for a cell, and the terminal device communicates with the cell by using a transmission resource (for example, a frequency domain resource or a spectrum resource) assigned by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service.

The terminal device may be a device that provides voice/data connectivity for a user, for example, a handheld device or a vehicle-mounted device that has a wireless connection function. Currently, some examples of the terminal device may be: a mobile phone (mobile phone), a tablet computer (pad), a computer with a wireless transceiver function (for example, a notebook computer or a palmtop computer), a mobile Internet device (mobile Internet device, MID), a VR device, an AR device, a wireless terminal in industrial control (industrial control), a wireless terminal in self driving (self driving), an unmanned aerial vehicle, a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless telephone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), or the like.

The wearable device may also be referred to as a wearable smart device, and is a general term for wearable devices, such as glasses, gloves, watches, clothes, and shoes, developed by applying wearable technologies to intelligent designs of daily wear. The wearable device is a portable device that can be directly worn on the body or integrated into clothes or an accessory of a user. The wearable device is not only a hardware device, but also implements powerful functions through software support, data exchange, and cloud interaction. In a broad sense, wearable smart devices include full-featured and large-sized devices that can implement complete or partial functions without depending on smartphones, such as smart watches or smart glasses, and devices that are dedicated to only one type of application function and need to work with other devices such as smartphones, such as various smart bands or smart jewelry for monitoring vital signs.

In addition, the terminal device may alternatively be a terminal device in an Internet of Things (internet of things, IoT) system. An IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrow band (narrow band, NB) technology.

In addition, the terminal device may alternatively include a sensor such as an intelligent printer, a train detector, or a gas station. Main functions include collecting data (some terminal devices), receiving control information and downlink data from the network device, sending an electromagnetic wave, and transmitting uplink data to the network device.

In embodiments of this application, the terminal device may also be referred to as user equipment (user equipment, UE), an access terminal, a subscriber unit, a subscriber station, a mobile station, a mobile, a remote station, a remote terminal, a mobile device, a user terminal, a terminal, a wireless communication device, a user agent, or a user apparatus.

It should be understood that specific forms of the network device and the terminal device are not limited in this application.

Terms in this application are first briefly described, to help better understand the method provided in embodiments of this application.
1. DCI: It is used to carry information such as information about a physical-layer resource assigned to the terminal device, a power control command, and a HARQ process number. In the current NR system, during downlink scheduling, if spatial multiplexing does not involve more than four layers, the network device may schedule one TB by using one piece of DCI, and an entire transport block uses one MCS. If spatial multiplexing involves more than four layers, the network device may schedule two TBs by using one piece of DCI, where each TB corresponds to an independent MCS, and the two TBs may occupy same time domain resources and same frequency domain resources. In this case, tactile data may be transmitted by using one TB, video data may be transmitted by using the other TB, and the two TBs may occupy different spatial resources. For example, there are eight layers of spatial resources in total, first four layers are used to carry TBs of the tactile data, and last four layers are used to carry TBs of the video data.

In a current NR standard, if a "maxNrofCodeWordsScheduledByDCI" field in RRC is set to 1, the network device may schedule one TB by using one piece of DCI (for example, DCI 0_1), and the DCI carries an MCS (occupying five bits (bits)), an NDI (occupying one bit), and an RV (occupying two bits) that correspond to the TB. If the "maxNrofCodeWordsScheduledByDCI" field is set to 2, the network device may schedule one or two TBs by using one piece of DCI (for example, DCI 1_1), and the DCI carries an MCS, an NDI, and an RV that correspond to each TB. Currently, DCI used for downlink scheduling supports scheduling of one or two TBs, and DCI used for uplink scheduling supports scheduling of one TB.

With reference to Table 1 and Table 2, the following describes in detail key fields of DCI when the network device schedules one TB by using the DCI, and key fields of DCI when the network device schedules two TBs by using the DCI.

Table 1 shows key fields of DCI (such as DCI 0_1) that supports scheduling of one TB.

**Table 1**

| Field | Occupied bits |
|---|---|
| DCI format identifier | 1 |
| Carrier indicator | 0, 3 |
| Bandwidth part indicator | 0,1,2 |
| Frequency domain resource assignment | 8 to 16 |
| Time domain resource assignment | 0, 1, 2, 3, 4, 5, 6 |
| Modulation and coding scheme | 5 |
| New data indicator | 1 |
| Redundancy version | 4 |
| HARQ process number | 4 |
| ... | ... |

As shown in Table 1, the DCI carries configuration parameters such as a DCI format identifier (identifier for DCI formats), a carrier indicator (carrier indicator), a bandwidth part indicator (bandwidth part indicator), frequency domain resource assignment (frequency domain resource assignment), time domain resource assignment (time domain resource assignment), a modulation and coding scheme (modulation and coding scheme), a new data indicator (new data indicator), a redundancy version (redundancy version), and a HARQ process number (HARQ process number). Each configuration parameter corresponds to an occupied bit. For example, the DCI format indicator occupies one bit.

Table 2 shows key fields of DCI (for example, DCI 1_1) (DCI for downlink scheduling) that supports scheduling of two TBs (for example, a TB 1 and a TB 2).

**Table 2**

| Field | Occupied bits |
|---|---|
| DCI format identifier | 1 |
| Carrier indicator | 0, 3 |
| Bandwidth part indicator | 0,1,2 |
| Frequency domain resource assignment | 8 to 16 |
| Time domain resource assignment | 0, 1, 2, 3, 4, 5, 6 |
| Modulation and coding scheme [TB 1] | 5 |
| New data indicator [TB 1] | 1 |
| Redundancy version [TB 1] | 2 |
| Modulation and coding scheme [TB 2] | 5 |
| New data indicator [TB 2] | 1 |
| Redundancy version [TB 2] | 2 |
| HARQ process number | 4 |
| ... | ... |

As shown in Table 2, the DCI carries configuration parameters such as a DCI format identifier, a carrier indicator, a bandwidth part indicator, frequency domain resource assignment, time domain resource assignment, and a HARQ process number, as well as a modulation and coding scheme, a new data indicator, a redundancy version, and the like that correspond to each TB. Each configuration parameter corresponds to an occupied bit. For example, the DCI format indicator occupies one bit.

2. XR: It is a general term for various reality-related technologies, including VR, AR, and MR. XR uses hardware devices and a variety of technical means to integrate virtual content with real-world scenes, providing people with immersive sensory experience, including visual, auditory, tactile, and other experience.

VR mainly refers to rendering of visual and audio scenes to simulate sensory stimulation of vision and audio in a real world to a user as much as possible. VR usually requires the user to wear a head-mounted display (head-mounted display, HMD) to replace the user's field of view with simulated visual components, and also requires the user to wear headsets to provide accompanying audio for the user.

AR mainly refers to provision of additional visual or auditory information or artificially generated content in a real environment perceived by the user. The acquisition of the real environment by the user may be direct, without intermediate sensing, processing, and rendering, or may be indirect, that is, transferred via a sensor or the like and subjected to further enhancement processing.

MR is an advanced form of AR. One of implementations of MR is inserting some virtual elements into a physical scene, to provide the user with immersive experience in which these virtual elements are a part of a real-world scene.

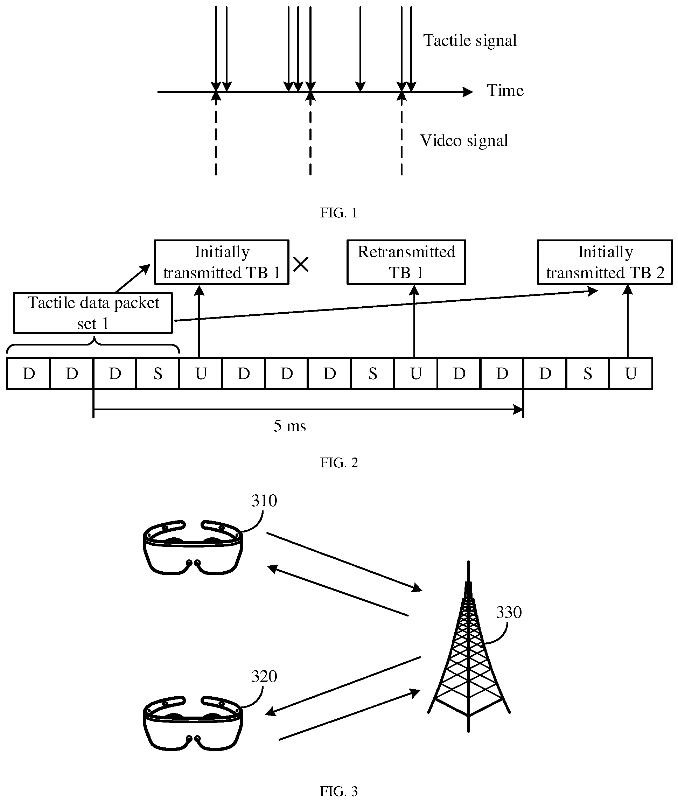

FIG. 1 is a diagram of an arrival time of a tactile signal and an arrival time of a video signal according to an embodiment of this application. The following describes in detail the tactile signal and differences between the tactile signal and the video signal with reference to FIG. 1.

Before tactile signals are encoded, signals generated by each tactile sensor are periodic, about 500 to 2000 packets are generated per second, and a size of each packet is 12 to 48 bytes. After being encoded, as shown in FIG. 1, the signals generated by each tactile sensor arrive randomly, and a time interval between two arrivals complies with a generalized Pareto distribution, where the generalized Pareto distribution is a right-skewed distribution. Video signals usually arrive periodically based on a frame rate. For example, in a video with a frame rate of 60 frames per second (frames per second, FPS), one video frame may arrive at an interval of 16.67 milliseconds (ms). In addition, a size of a video frame is greater than that of a tactile data packet. For example, for a video with a broadband rate of 30 megabits per second (million bits per second, Mbps) and a frame rate of 60 frames per second, a size of a single video frame is approximately 60 to 100 Kbytes.

In addition, due to differences in human perception, tactile signals and video signals have different requirements on network transmission. For example, for a video signal, a reliability requirement is 99%, and a delay requirement is 10 ms; and for a tactile signal, a reliability requirement is 99.999%, and a delay requirement is 5 ms. When a subcarrier spacing is 30 kilohertz (kilohertz, kHz), for the tactile signal, within the delay requirement of 5 ms, the tactile signal usually may have one retransmission opportunity, that is, tactile data may have two transmission opportunities: new transmission and retransmission. When the tactile data is retransmitted, a transmission opportunity of new data is occupied, which may cause a transmission timeout of tactile data. The following describes an example of a transmission timeout of tactile data with reference to FIG. 2.

FIG. 2 is a diagram of a transmission timeout of tactile data according to an embodiment of this application. In FIG. 2, an example in which a subcarrier spacing is 30 kHz and a length of each slot is 0.5 ms is used, where D represents a downlink slot, and U represents an uplink slot.

As shown in FIG. 2, a tactile data packet set 1 includes one or more tactile data packets. One part of data packets in the tactile data packet set 1 are newly transmitted by using a TB 1, but transmission of the TB 1 fails, and the TB 1 needs to be retransmitted. In other words, retransmission of the TB 1 occupies a transmission opportunity of another part of initially transmitted data in the tactile data packet set 1. Consequently, in a next uplink slot, a terminal device sends a retransmitted TB 1; however, the other part of initially transmitted data in the tactile data packet set 1, which has not been transmitted at all, can only wait in a queue for a transmission opportunity. For example, an initially transmitted TB 2 is sent in a next uplink slot. By then, more than 5 ms may have elapsed, and this part of initially transmitted data may become invalid due to a timeout.

It can be learned from the foregoing that DCI used for uplink scheduling supports carrying a configuration parameter corresponding to one TB. In other words, a network device can schedule only one TB by using one piece of DCI. The TB is either used to carry retransmitted data, or used to carry newly transmitted (or initially transmitted) data. Therefore, flexibility of scheduling the TB is relatively low, and user experience may be affected. For example, in some scenes requiring retransmission of tactile data, a network device may schedule retransmitted data by using DCI. In this case, a terminal device may first transmit the retransmitted data, and some initially transmitted data needs to wait in a queue. Consequently, the initially transmitted data may become invalid due to a timeout, affecting user experience.

Therefore, this application provides a data transmission method. The method includes: changing a design of DCI, so that a network device can flexibly schedule a TB. For example, in this application, the DCI may carry configuration parameters corresponding to two TBs, and types of the two TBs include an initially transmitted TB and a retransmitted TB. In this way, the network device can flexibly schedule an initially transmitted TB and/or a retransmitted TB.

For ease of understanding a data transmission method provided in embodiments of this application, the following describes a system architecture for the data transmission method provided in embodiments of this application. It may be understood that the system architecture described in embodiments of this application is intended to describe the technical solutions in embodiments of this application more clearly, and does not constitute any limitation on the technical solutions provided in embodiments of this application.

FIG. 3 is a diagram of a system architecture of a communication system to which a method according to an embodiment of this application is applicable.

As shown in FIG. 3, the communication system includes a terminal device and a network device, for example, a terminal device 310, a terminal device 320, and a network device 330 shown in FIG. 3. The terminal device 310 and the terminal device 320 may be mobile or stationary. The network device 330 may be a macro base station, a micro base station, or the like. This is not limited in this application. The network device 330 may provide communication coverage for a specific geographical area, and may perform radio link communication with terminal devices (such as the terminal device 310 and the terminal device 320) located in the coverage area (cell).

It should be understood that, in FIG. 3, an example in which the terminal device 310 and the terminal device 320 are VR glasses and the network device 330 is a base station is used. However, this shall not constitute any limitation on this embodiment of this application. Specific types of the terminal device and the network device are not limited in this application.

It should be further understood that the communication system may include more or fewer network devices, and that another quantity of terminal devices may be included in a coverage area of each network device. This is not limited in this embodiment of this application.

The following describes in detail the data transmission method provided in embodiments of this application with reference to the accompanying drawings.

It should be understood that, in the following embodiments, the method is described from a perspective of interaction between the terminal device and the network device, but this shall not constitute any limitation on an execution body of the method. The method provided in embodiments of this application can be performed provided that a program that records code of the method provided in embodiments of this application can be run. For example, the terminal device may alternatively be replaced with a component (for example, a chip or a chip system) configured in the terminal device, or another functional module that can invoke a program and execute the program; and the network device may alternatively be replaced with a component (for example, a chip or a chip system) configured in the network device, or another functional module that can invoke a program and execute the program. This is not limited in embodiments of this application. The terminal device may be, for example, the terminal device 310 or the terminal device 320 shown in FIG. 3, and the network device may be, for example, the network device 330 shown in FIG. 3.

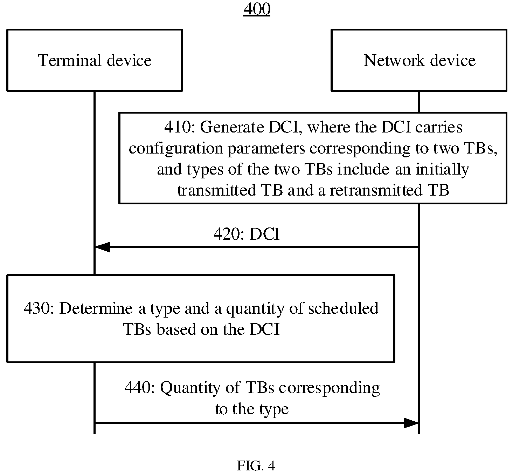

FIG. 4 is a schematic flowchart of a data transmission method 400 according to an embodiment of this application. The data transmission method 400 shown in FIG. 4 may include step 410 to step 440. The following describes in detail the steps in the method 400.

Step 410: A network device generates DCI, where the DCI carries configuration parameters corresponding to two TBs, and types of the two TBs include an initially transmitted TB and a retransmitted TB.

The initially transmitted TB is used to carry initially transmitted data, and the retransmitted TB is used to carry retransmitted data. The initially transmitted data is data transmitted for the first time. In this application, the initially transmitted data may also be referred to as new data, initially transmitted data, or the like. Correspondingly, a TB used to carry the initially transmitted data may be referred to as an initially transmitted TB, an initial transmission TB, or the like. This is not limited in this application. The retransmitted data is data that needs to be retransmitted after previous transmission fails. Correspondingly, a TB used to carry the retransmitted data may be referred to as a retransmitted TB.

For example, the network device may generate DCI used for uplink scheduling. The DCI carries configuration parameters corresponding to two TBs. Types of the two TBs include an initially transmitted TB and a retransmitted TB. The initially transmitted TB is used to carry initially transmitted data, and the retransmitted TB is used to carry retransmitted data. In this way, the network device can flexibly schedule the TBs by using the DCI.

Step 420: The network device sends the DCI to a terminal device. Correspondingly, the terminal device receives the DCI from the network device.

For example, after generating the DCI, the network device sends the DCI to the terminal device, to schedule uplink data. Correspondingly, the terminal device receives the DCI from the network device.

Step 430: The terminal device determines a type and a quantity of scheduled TBs based on the DCI.

The following uses an example in which one piece of DCI carries configuration parameters corresponding to two TBs, to describe in detail a method for determining a type and a quantity of scheduled TBs by the terminal device and how the DCI is designed. DCI 0_1 is used as an example of the DCI.

In a scenario in which one piece of DCI carries configuration parameters corresponding to two TBs, for example, the configuration parameters include HARQ process numbers, the DCI may carry one NDI and two HARQ process numbers, and the two HARQ process numbers are in one-to-one correspondence with the two TBs. It may be understood that a design of the DCI provided in this application is applicable to a case in which only one retransmitted TB or one initially transmitted TB is scheduled. In this case, the DCI may carry configuration parameters corresponding to the retransmitted TB and the initially transmitted TB, but actually, only the retransmitted TB or the initially transmitted TB is scheduled.

The terminal device may determine the type and the quantity of the scheduled TBs based on the NDI and the two HARQ process numbers.

In a possible design, when the NDI is toggled, the DCI is used to schedule only one initially transmitted TB, that is, the type of the scheduled TB is an initially transmitted TB, and the quantity is one. When the NDI is not toggled, if the two HARQ process numbers are consistent, the DCI is used to schedule only one retransmitted TB, that is, the type of the scheduled TB is a retransmitted TB, and the quantity is one; or if the two HARQ process numbers are inconsistent, the DCI is used to schedule one retransmitted TB and one initially transmitted TB, that is, the types of the scheduled TBs are an initially transmitted TB and a retransmitted TB, and the quantity is two.

In another possible design, when the NDI is not toggled, the DCI is used to schedule only one retransmitted TB, that is, the type of the scheduled TB is a retransmitted TB, and the quantity is one. When the NDI is toggled, if the two HARQ process numbers are consistent, the DCI is used to schedule only one initially transmitted TB, that is, the type of the scheduled TB is an initially transmitted TB, and the quantity is one; or if the two HARQ process numbers are inconsistent, the DCI is used to schedule one retransmitted TB and one initially transmitted TB, that is, the types of the scheduled TBs are an initially transmitted TB and a retransmitted TB, and the quantity is two.

In this application, NDI toggling means whether the NDI changes compared with a previous NDI. For example, compared with the previous NDI, if the NDI changes from 1 to 0, or from 0 to 1, it indicates that the NDI is toggled; or compared with the previous NDI, if both the NDI and the previous NDI are 1, or both the NDI and the previous NDI are 0, it indicates that the NDI is not toggled.

Optionally, the configuration parameters corresponding to the TBs include an MCS and an RV, and the DCI carries an MCS and an RV that correspond to each TB.

The MCS may occupy 0, 2, or 5 bits. For example, if no bit is occupied by the MCS corresponding to the initially transmitted TB, it indicates that the MCS corresponding to the initially transmitted TB is consistent with the MCS corresponding to the retransmitted TB. For another example, two bits are used to represent a modulation mode for the initially transmitted TB. For another example, five bits are used to represent a modulation mode for the initially transmitted TB.

Table 3 is an example of a design of each field in DCI when one piece of DCI carries configuration parameters corresponding to two TBs according to this embodiment of this application.

**Table 3**

| Field | Occupied bits |
|---|---|
| DCI format identifier | 1 |
| Carrier indicator | 0, 3 |
| Bandwidth part indicator | 0,1,2 |
| Frequency domain resource assignment | 8 to 16 |
| Time domain resource assignment | 0, 1, 2, 3, 4, 5, 6 |
| Modulation and coding scheme 1 [TB 1] | 5 |
| New data indicator | 1 |
| Redundancy version 1 [TB 1] | 2 |
| HARQ process number 1 [TB 1] | 4 |
| Modulation and coding scheme 2 [TB 2] | 0,2,5 |
| Redundancy version 2 [TB 2] | 1, 2 |
| HARQ process number 2 [TB 2] | 4 |
| ... | ... |

As shown in Table 3, the DCI carries configuration parameters corresponding to two TBs: a TB 1 and a TB 2. The DCI carries one NDI, as well as an MCS, an RV, and a HARQ process number that correspond to each TB, for example, an MCS 1 corresponding to the TB 1, an RV 1 corresponding to the TB 1, a HARQ 1 corresponding to the TB 1, an MCS 2 corresponding to the TB 2, an RV 2 corresponding to the TB 2, and a HARQ 2 corresponding to the TB 2.

In an example, when the NDI is toggled, the DCI is used to schedule only one initially transmitted TB, for example, the TB 2. To be specific, the terminal sends the initially transmitted TB by using the configuration parameter corresponding to the TB 2. The configuration parameter corresponding to the TB 1 may be considered invalid. In other words, the terminal device does not send the TB 1 by using the configuration parameter corresponding to the TB 1. When the NDI is not toggled, if values of the HARQ process number 1 and the HARQ process number 2 are consistent, the DCI is used to schedule only one retransmitted TB, for example, the TB 1. In other words, the terminal device sends the retransmitted TB by using the configuration parameter corresponding to the TB 1. The configuration parameter corresponding to the TB 2 may be considered invalid. For example, the MCS 2, the RV 2, and the HARQ process number 2 are invalid. If values of the HARQ process number 1 and the HARQ process number 2 are inconsistent, the DCI is used to schedule one retransmitted TB and one initially transmitted TB, where the initially transmitted TB may use, for example, the MCS 1, the RV 1, and the HARQ process number 1, and the retransmitted TB may use, for example, the MCS 2, the RV 2, and the HARQ process number 2.

In another example, when the NDI is not toggled, the DCI is used to schedule only one retransmitted TB, for example, the TB 1, and the configuration parameter corresponding to the TB 2 may be considered invalid. When the NDI is toggled, if values of the HARQ process number 1 and the HARQ process number 2 are consistent, the DCI is used to schedule only one initially transmitted TB, for example, the TB 2, where the configuration parameter corresponding to the TB 1 may be considered invalid, for example, the MCS 1, the RV 1, and the HARQ process number 1 are invalid. If values of the HARQ process number 1 and the HARQ process number 2 are inconsistent, the DCI is used to schedule one retransmitted TB and one initially transmitted TB, where the initially transmitted TB may use, for example, the MCS 1, the RV 1, and the HARQ process number 1, and the retransmitted TB may use, for example, the MCS 2, the RV 2, and the HARQ process number 2.

It can be learned from Table 3 that the MCS may occupy 0, 2, or 5 bits. For example, if no bit is occupied by the MCS corresponding to the initially transmitted TB, it indicates that the MCS corresponding to the initially transmitted TB is consistent with the MCS corresponding to the retransmitted TB. For another example, two bits are used to represent a modulation mode for the initially transmitted TB. For another example, five bits are used to represent a modulation mode for the initially transmitted TB.

In a scenario in which one piece of DCI carries configuration parameters corresponding to two TBs, the configuration parameters may include NDIs, the DCI may carry two NDIs, and the two NDIs are in one-to-one correspondence with the two TBs. The terminal device may determine the type and the quantity of scheduled TBs based on the two NDIs.

In a possible design, when one of the two NDIs is toggled and the other one of the two NDIs is not toggled, the terminal device determines that the scheduled TBs are one initially transmitted TB and one retransmitted TB; when neither of the two NDIs is toggled, determines that the scheduled TB is one retransmitted TB; or when the two NDIs are both toggled, determines that the scheduled TB is one initially transmitted TB.

For example, the DCI carries configuration parameters corresponding to two TBs: a TB 1 and a TB 2, and the DCI carries an NDI 1 corresponding to the TB 1 and an NDI 2 corresponding to the TB 2. If the NDI 1 and the NDI 2 are toggled, the DCI is used to schedule only one initially transmitted TB. If the NDI 1 is not toggled and the NDI 2 is not toggled, the DCI is used to schedule only one retransmitted TB. If the NDI 1 is not toggled and the NDI 2 is toggled, the DCI is used to schedule one retransmitted TB and one initially transmitted TB.

Table 4 is another example of a design of each field in DCI when one piece of DCI carries configuration parameters corresponding to two TBs according to this embodiment of this application.

**Table 4**

| Field | Occupied bits |
|---|---|
| DCI format identifier | 1 |
| Carrier indicator | 0, 3 |
| Bandwidth part indicator | 0,1,2 |
| Frequency domain resource assignment | 8 to 16 |
| Time domain resource assignment | 0, 1, 2, 3, 4, 5, 6 |
| Modulation and coding scheme 1 [TB 1] | 5 |
| New data indicator 1 [TB 1] | 1 |
| Redundancy version 1 [TB 1] | 2 |
| HARQ process number 1 [TB 1] | 4 |
| Modulation and coding scheme 2 [TB 2] | 0,2,5 |
| New data indicator 2 [TB 2] | 1 |
| Redundancy version 2 [TB 2] | 1, 2 |
| HARQ process number 2 [TB 2] | 4 |
| ... | ... |

As shown in Table 4, the DCI carries configuration parameters corresponding to two TBs: a TB 1 and a TB 2. The DCI carries two NDIs, as well as an MCS, an RV, and a HARQ process number that correspond to each TB, for example, an NDI 1, an MCS 1, an RV 1, and a HARQ process number 1 corresponding to the TB 1, and an NDI 2, an MCS 2, an RV 2, and a HARQ process number 2 corresponding to the TB 2.

In an example, the DCI carries the configuration parameters corresponding to the two TBs: the TB 1 and the TB 2, and the DCI carries the NDI 1 corresponding to the TB 1 and the NDI 2 corresponding to the TB 2. If the NDI 1 and the NDI 2 are toggled, the DCI is used to schedule only one initially transmitted TB. If the NDI 1 is not toggled and the NDI 2 is not toggled, the DCI is used to schedule only one retransmitted TB. If the NDI 1 is not toggled and the NDI 2 is toggled, the DCI is used to schedule one retransmitted TB and one initially transmitted TB. A configuration of the NDI 1, the MCS 1, the RV 1, the HARQ process number 1, and the like corresponding to the TB 1 may be, for example, a retransmission configuration, and a configuration of the NDI 2, the MCS 2, the RV 2, and the HARQ process number 2 corresponding to the TB 2 may be, for example, a new transmission configuration.

Step 440: The terminal device sends, to the network device, the quantity of TBs corresponding to the type.

After receiving the DCI and determining the type and the quantity of the scheduled TBs, the terminal device may send, to the network device on transmission resources indicated by the DCI, the quantity of TBs corresponding to the type of the scheduled TBs. For example, if the scheduled TBs are one retransmitted TB and one initially transmitted TB, the terminal device may simultaneously send one retransmitted TB and one initially transmitted TB to the network device.

It may be understood that the DCI may carry configuration parameters corresponding to two TBs. This is merely an example, and shall not constitute any limitation on this embodiment of this application. For example, initially transmitted TBs may be further classified into an initially transmitted TB without a retransmission opportunity and an initially transmitted TB with a retransmission opportunity. The network device may generate DCI used for uplink scheduling. The DCI carries configuration parameters corresponding to three TBs. Types of the three TBs include a retransmitted TB, an initially transmitted TB without a retransmission opportunity, and an initially transmitted TB with a retransmission opportunity. The retransmitted TB is used to carry retransmitted data, the initially transmitted TB without a retransmission opportunity is used to carry initially transmitted data without a retransmission opportunity, and the initially transmitted TB with a retransmission opportunity is used to carry initially transmitted data with a retransmission opportunity.

In a scenario in which one piece of DCI carries configuration parameters corresponding to three TBs, for example, one TB is used to carry retransmitted data, one TB is used to carry initially transmitted data without a retransmission opportunity, and one TB is used to carry initially transmitted data with a retransmission opportunity. The DCI carries one NDI and three HARQ process numbers.

The terminal device may determine the type and the quantity of scheduled TBs based on the NDI and the three HARQ process numbers. The following describes in detail a process in which the terminal device determines the type and the quantity of the scheduled TBs based on the NDI and the three HARQ process numbers by using an example in which the three HARQ process numbers are respectively a HARQ process number 1, a HARQ process number 2, and a HARQ process number 3.

In a possible design, when the NDI is toggled, cases of the three HARQ process numbers are follows:
If the HARQ process number 2 is the same as the HARQ process number 3 and is different from the HARQ process number 1, the DCI is used to schedule one retransmitted TB and one initially transmitted TB with a retransmission opportunity.

If the HARQ process number 1 is the same as the HARQ process number 2 and is different from the HARQ process number 3, the DCI is used to schedule one initially transmitted TB without a retransmission opportunity and one initially transmitted TB with a retransmission opportunity.

If the HARQ process number 1, the HARQ process number 2, and the HARQ process number 3 are the same, the DCI is used to schedule one initially transmitted TB with a retransmission opportunity.

If the HARQ process number 1, the HARQ process number 2, and the HARQ process number 3 are all different, the DCI is used to schedule one retransmitted TB, one initially transmitted TB without a retransmission opportunity, and one initially transmitted TB with a retransmission opportunity, where the initially transmitted TB without a retransmission opportunity and the retransmitted TB may use a same group of parameters such as an MCS and an RV of a TB, and the TB with a retransmission opportunity may use parameters such as an MCS and an RV corresponding to another TB.

When the NDI is not toggled, cases of the three HARQ process numbers are as follows:
If the HARQ process number 1 is the same as the HARQ process number 3 and is different from the HARQ process number 2, the DCI is used to schedule one retransmitted TB.

If the HARQ process number 2 is the same as the HARQ process number 3 and is different from the HARQ process number 1, the DCI is used to schedule one initially transmitted TB without a retransmission opportunity.

If the HARQ process number 1, the HARQ process number 2, and the HARQ process number 3 are all different, the DCI is used to schedule one retransmitted TB and one initially transmitted TB without a retransmission opportunity.

It should be understood that the foregoing design for determining the type and the quantity of the scheduled TBs based on the NDI and the three HARQ process numbers is merely an example, and shall not constitute any limitation on this embodiment of this application, provided that the NDI and the three HARQ process numbers can be used to determine different cases of scheduled TBs. For example, when the NDI is not toggled, if the HARQ process number 1, the HARQ process number 2, and the HARQ process number 3 are all the same, one case may also be indicated. For example, when the NDI is not toggled, if the HARQ process number 1, the HARQ process number 2, and the HARQ process number 3 are all the same, the DCI is used to schedule one retransmitted TB. For example, when the NDI is toggled, if the HARQ process number 1, the HARQ process number 2, and the HARQ process number 3 are all different, the DCI is used to schedule one retransmitted TB, one initially transmitted TB without a retransmission opportunity, and one initially transmitted TB with a retransmission opportunity, where the retransmitted TB may use a group of configuration parameters such as an MCS and an RV of a TB, and the initially transmitted TB without a retransmission opportunity and the TB with a retransmission opportunity may share another group of configuration parameters such as an MCS and an RV corresponding to a TB.

Optionally, the configuration parameters corresponding to the TBs, carried in the DCI, may include an MCS and an RV.

The MCS may occupy 0, 2, or 5 bits. For example, if no bit is occupied by the MCS corresponding to the initially transmitted TB, it indicates that the MCS corresponding to the initially transmitted TB is consistent with the MCS corresponding to the retransmitted TB. For another example, two bits are used to represent a modulation mode for the initially transmitted TB. For another example, five bits are used to represent a modulation mode for the initially transmitted TB.

Table 5 is an example of a design of each field in DCI when one piece of DCI carries configuration parameters corresponding to three TBs according to this embodiment of this application.

**Table 5**

| Field | Occupied bits |
|---|---|
| DCI format identifier | 1 |
| Carrier indicator | 0, 3 |
| Bandwidth part indicator | 0,1,2 |
| Frequency domain resource assignment | 8 to 16 |
| Time domain resource assignment | 0, 1, 2, 3, 4, 5, 6 |
| Modulation and coding scheme 1 [TB 1] | 5 |
| New data indicator | 1 |
| Redundancy version 1 [TB 1] | 2 |
| HARQ process number 1 [TB 1] | 4 |
| Modulation and coding scheme 2 [TB 2] | 0,2,5 |
| Redundancy version 2 [TB 2] | 1, 2 |
| HARQ process number 2 [TB 2] | 4 |
| HARQ process number 3 [TB 3] | 4 |
| ... | ... |

As shown in Table 5, the DCI carries configuration parameters corresponding to three TBs: a TB 1, a TB 2, and a TB 3. The DCI carries: one NDI; an MCS 1, an RV 1, and a HARQ process number 1 that correspond to the TB 1; an MCS 2, an RV 2, and a HARQ process number 2 that correspond to the TB 2; and a HARQ process number 3 corresponding to the TB 3. An initially transmitted TB with a retransmission opportunity may use the MCS 1, and an initially transmitted TB without a retransmission opportunity and a retransmitted TB use a same group of parameters such as an MCS, for example, the MCS 2. Alternatively, an initially transmitted TB with a retransmission opportunity and an initially transmitted TB without a retransmission opportunity may use a same group of configuration parameters such as the MCS 1, for example, the MCS 1 and the RV 1, and a retransmitted TB uses another group of configuration parameters such as an MCS, for example, the MCS 2 and the RV 2.

For example, when the NDI is not toggled, cases of the three HARQ process numbers include: If the HARQ process number 3 is the same as the HARQ process number 1 and is different from the HARQ process number 2, the DCI is used to schedule one retransmitted TB, that is, the network device may schedule one retransmitted TB by using configuration parameters such as the MCS 1, RV 1, and HARQ process number 1 corresponding to the TB 1. If the HARQ process number 3 is the same as the HARQ process number 2 and is different from the HARQ process number 1, the DCI is used to schedule one initially transmitted TB without a retransmission opportunity, that is, the network device may schedule one initially transmitted TB without a retransmission opportunity by using configuration parameters such as the MCS 2, RV 2, and HARQ process number 2 corresponding to the TB 2. If the HARQ process number 1, the HARQ process number 2, and the HARQ process number 3 are all different, the DCI is used to schedule one retransmitted TB and one initially transmitted TB without a retransmission opportunity, that is, the network device may schedule one retransmitted TB by using configuration parameters such as the MCS 1, RV 1, and HARQ process number 1 corresponding to the TB 1, and schedule one initially transmitted TB without a retransmission opportunity by using configuration parameters such as the MCS 2, RV 2, and HARQ process number 2 corresponding to the TB 2.

When the NDI is toggled, cases of the three HARQ process numbers include: If the HARQ process number 2 is the same as the HARQ process number 3 and is different from the HARQ process number 1, the DCI is used to schedule only one retransmitted TB and one initially transmitted TB with a retransmission opportunity, that is, the network device may schedule one retransmitted TB by using parameters such as the MCS 1, RV 1, and HARQ process number 1 corresponding to the TB 1, and schedule one initially transmitted TB with a retransmission opportunity by using configuration parameters such as the MCS 2, RV 2, and HARQ process number 2 corresponding to the TB 2. If the HARQ process number 1 is the same as the HARQ process number 2 and is different from the HARQ process number 3, the DCI is used to schedule one initially transmitted TB without a retransmission opportunity and one initially transmitted TB with a retransmission opportunity, that is, the network device may schedule one initially transmitted TB without a retransmission opportunity by using configuration parameters such as the MCS 1, RV 1, and HARQ process number 1 corresponding to the TB 1, and schedule one initially transmitted TB with a retransmission opportunity by using configuration parameters such as the MCS 2, RV 2, and HARQ process number 2 corresponding to the TB 2. If the HARQ process number 1, the HARQ process number 2, and the HARQ process number 3 are the same, the DCI is used to schedule one initially transmitted TB with a retransmission opportunity, that is, the network device may schedule one initially transmitted TB with a retransmission opportunity by using configuration parameters such as the MCS 1, RV 1, and HARQ process number 1 corresponding to the TB 1. If the HARQ process number 1, the HARQ process number 2, and the HARQ process number 3 are all different, the DCI is used to schedule one retransmitted TB, one initially transmitted TB without a retransmission opportunity, and one initially transmitted TB with a retransmission opportunity, where the initially transmitted TB without a retransmission opportunity and the retransmitted TB may use a same group of configuration parameters such as an MCS and an RV, and the TB with a retransmission opportunity may use another group of configuration parameters such as an MCS and an RV, that is, the network device may schedule one retransmitted TB by using configuration parameters such as the MCS 1, RV 1, and HARQ process number 1 corresponding to the TB 1, schedule one initially transmitted TB without a retransmission opportunity by using configuration parameters such as the MCS 1 and RV 1 corresponding to the TB 1, and the HARQ process number 2, and schedule one initially transmitted TB with a retransmission opportunity by using configuration parameters such as the MCS 2 and RV 2 corresponding to the TB 2, and the HARQ process number 3. When a retransmitted TB may use a group of configuration parameters such as an MCS and an RV, and an initially transmitted TB without a retransmission opportunity and a TB with a retransmission opportunity use another group of configuration parameters such as an MCS and an RV corresponding to a TB, for example, the network device may schedule one retransmitted TB by using configuration parameters such as the MCS 1, RV 1, and HARQ process number 1 corresponding to the TB 1, schedule one initially transmitted TB without a retransmission opportunity by using configuration parameters such as the MCS 2, RV 2, and HARQ process number 2 corresponding to the TB 2, and schedule one initially transmitted TB with a retransmission opportunity by using configuration parameters such as the MCS 2 and RV 2 corresponding to the TB 2, and the HARQ process number 3.

After determining the type and the quantity of the scheduled TBs, the terminal device sends the quantity of TBs corresponding to the type. For example, if the scheduled TBs are one retransmitted TB, one initially transmitted TB with a retransmission opportunity, and one initially transmitted TB without a retransmission opportunity, the terminal device may simultaneously send one retransmitted TB, one initially transmitted TB with a retransmission opportunity, and one initially transmitted TB without a retransmission opportunity to the network device.

The method 400 further includes: The network device sends an RRC message to the terminal device, where the RRC message indicates an assignment ratio of transmission resources assigned by the network device to the terminal device, the assignment ratio is used to divide the transmission resources into N portions of resources, N is the quantity of the scheduled TBs, each of the N portions of resources is used to transmit one corresponding TB, and N is an integer greater than or equal to 2. Correspondingly, the terminal device receives the RRC message from the network device.

The terminal device divides the transmission resources into a plurality of portions of resources based on the assignment ratio and the transmission resources assigned in the DCI. The plurality of portions of resources are in one-to-one correspondence with a plurality of TBs, and each portion of resources is used to transmit a corresponding TB.

The transmission resources include time domain resources and frequency domain resources.

In a possible implementation, the terminal device arranges, in ascending order of frequencies (or in descending order of frequencies), frequency domain resources assigned by the network device, and further divides the frequency domain resources into a plurality of portions of frequency domain resources based on the assignment ratio; and/or arranges, in ascending order of time (or in descending order of time), time domain resources assigned by the network device, and further divides the time domain resources into a plurality of portions of time domain resources based on the assignment ratio.

In an example, the RRC message indicates an assignment ratio of frequency domain resources. For example, a "FrequencyDomianDivision: ENUMERATED{null, 1/4, 1/8, ...}" field is added to the RRC message, where "null" indicates invalidity, that is, no division of the frequency domain resources, and "1/4, 1/8, ..." indicates candidate values for the assignment ratio. For example, if the quantity of the scheduled TBs is 2, 1/4 indicates that one portion of frequency domain resources occupies 1/4, and that the other portion of frequency domain resources occupies 3/4; and 1/8 indicates that one portion of frequency domain resources occupies 1/8, and that the other portion of frequency domain resources occupies 7/8. The terminal device may perform division based on 1/4 and 3/4 respectively occupied by the two portions of resources, or may perform division based on 1/8 and 7/8, or the like.

In another example, the RRC message indicates an assignment ratio of time domain resources. For example, a "TimeDomianDivision: ENUMERATED {null, 1/14, 2/14, ...}" field is added to the RRC message, where "null" indicates invalidity, that is, no division of the time domain resources, and "1/14, 2/14, ..." indicates candidate values for the assignment ratio. For example, if the quantity of the scheduled TBs is 2, 1/14 indicates that one portion of time domain resources occupies 1/14, and that the other portion of time domain resources occupies 13/14; and 2/14 indicates that one portion of time domain resources occupies 2/14, and that the other portion of time domain resources occupies 12/14. The terminal device may perform division based on 1/14 and 13/14 respectively occupied by the two portions of resources, or may perform division based on 2/14 and 12/14, or the like.

There are the following two possible designs about how the network device indicates the assignment ratio in the RRC message:

In a possible design, the RRC message indicates a proportion of each of the N portions of resources in the transmission resources assigned by the network device to the terminal device.

For example, if the DCI is used to schedule two TBs, and each TB corresponds to one portion of frequency domain resources, that is, the frequency domain resources assigned in the DCI are divided into two portions, a "FrequencyDomianDivision: ENUMERATED {null, {1/4, 3/4}, {1/8, 7/8} }" field may be added to the RRC message, where "{1/4, 3/4}" indicates a candidate proportion of each of the two portions of frequency domain resources obtained through division in the frequency domain resources assigned by the network device.

For another example, if the DCI is used to schedule three TBs, and each TB corresponds to one portion of frequency domain resources, that is, the frequency domain resources assigned in the DCI are divided into three portions, a "FrequencyDomianDivision: ENUMERATED {null, {1/4, 1/4, 1/2}, {1/8, 1/8, 3/4}}" field may be added to the RRC message, where "{1/4, 1/4, 1/2}" indicates a candidate proportion of each of the three portions of frequency domain resources obtained through division in the frequency domain resources assigned by the network device.

In another possible design, the RRC message indicates respective proportions of N-1 portions of resources in the N portions of resources.

For example, if the DCI is used to schedule three TBs, and each TB corresponds to one portion of frequency domain resources, that is, the frequency domain resources assigned in the DCI are divided into three portions, a "FrequencyDomianDivision: ENUMERATED{null, {1/4, 1/4}, {1/8, 1/8}}" field may be added to the RRC message, where "{1/4, 1/4}" indicates candidate proportions of two of the three portions of frequency domain resources obtained through division in the assigned frequency domain resources, and a proportion of another portion of frequency domain resources in the assigned frequency domain resources is 1-1/4-1/4=1/2.

Based on the foregoing technical solution, the DCI may carry the configuration parameters corresponding to the retransmitted TB and the initially transmitted TB. In this way, the network device can flexibly schedule the retransmitted TB and/or the initially transmitted TB by using the DCI. Therefore, the network device can schedule the retransmitted TB and the initially transmitted TB based on different requirements when both the retransmitted data and the initially transmitted data need to be transmitted. When the retransmitted data does not need to be transmitted, the initially transmitted TB may be scheduled, but the retransmitted TB is not scheduled. When the initially transmitted data does not need to be transmitted, the retransmitted TB may be scheduled, but the initially transmitted TB is not scheduled. In this way, transmission of the retransmitted data is not delayed due to waiting for transmission of the initially transmitted data, and a problem of decoding failure caused by untimely transmission of the retransmitted data can be avoided; and transmission of the initially transmitted data is not delayed due to waiting for transmission of the retransmitted data either, and a problem that the initially transmitted data becomes invalid due to a timeout can be avoided. In general, the transmission delay is shortened, transmission performance is improved, and user experience is improved.

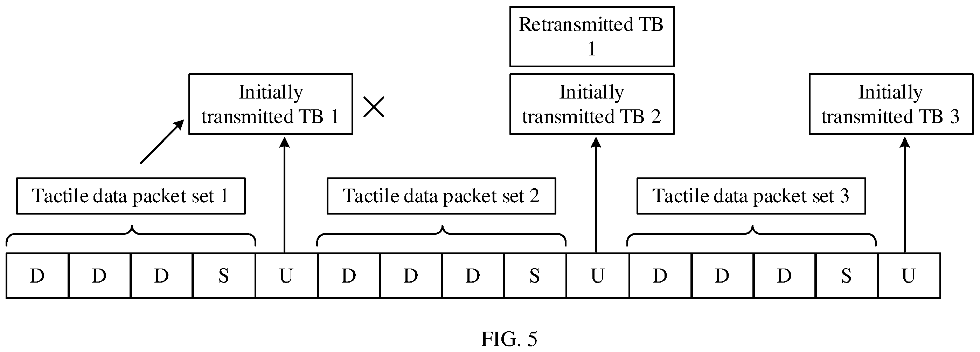

FIG. 5 is a diagram in which a network device schedules two TBs by using one piece of DCI according to an embodiment of this application.

As shown in FIG. 5, during transmission in one uplink slot (slot), transmission of both initially transmitted data and retransmitted data is supported. A tactile data packet set 1 is transmitted on an initially transmitted TB 1, but transmission of the TB 1 fails. In this application, one piece of DCI may be used to schedule two TBs. Therefore, both the TB 1 and an initially transmitted TB 2 of a tactile data packet set 2 may be transmitted in a next uplink slot, thereby reducing a transmission delay, avoiding a problem that the tactile data packet set 2 becomes invalid due to a timeout when waiting for transmission due to retransmission of the TB 1, and further helping improve user experience.

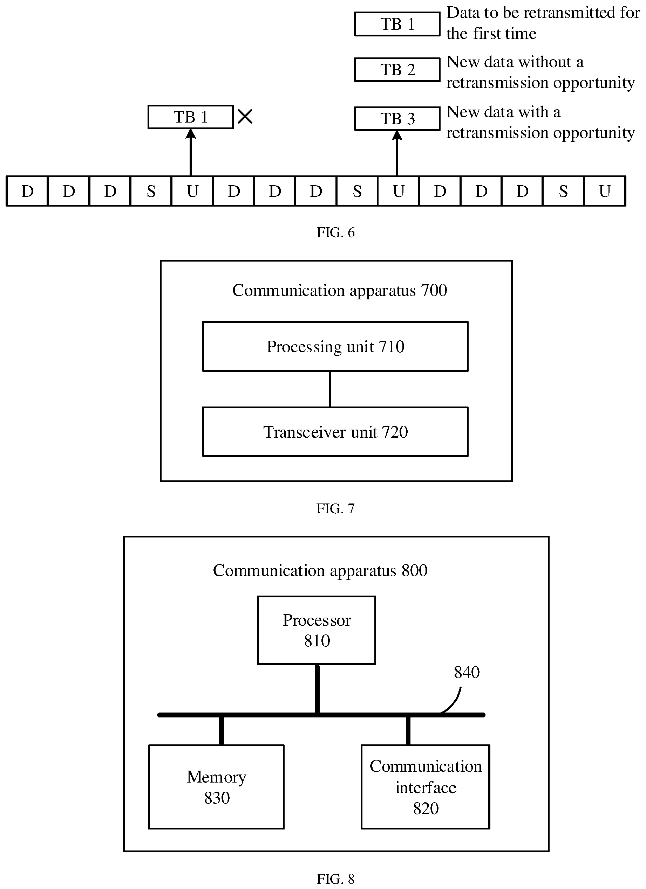

FIG. 6 is a diagram in which a network device schedules three TBs by using one piece of DCI according to an embodiment of this application.

There are three types of tactile data to be transmitted in an uplink slot: retransmitted data, new data without a retransmission opportunity, and new data with a retransmission opportunity. As shown in FIG. 6, tactile data to be transmitted in an uplink slot includes data to be retransmitted in a TB 1 for the first time due to a previous transmission error; new data in a TB 2 without a retransmission opportunity, which has no retransmission opportunity due to waiting or other reasons; and new data in a TB 3 with a retransmission opportunity. In this application, the DCI may be used to schedule three TBs. In this way, the TB 1, the TB 2, and the TB 3 can all be transmitted in a next uplink slot, thereby avoiding a problem that new data becomes invalid due to a timeout, and helping improve user experience.

FIG. 7 to FIG. 10 are diagrams of possible structures of communication apparatuses according to embodiments of this application.

As shown in FIG. 7, a communication apparatus 700 includes a processing unit 710 and a transceiver unit 720.

The communication apparatus 700 is configured to implement a function of the terminal device in the method embodiment shown in FIG. 4, or the communication apparatus 700 may include a module configured to implement any function or operation of the terminal device in the method embodiment shown in FIG. 4. The module may be entirely or partially implemented by using software, hardware, firmware, or any combination thereof. Alternatively, the communication apparatus 700 is configured to implement a function of the network device in the method embodiment shown in FIG. 4, or the communication apparatus 700 may include a module configured to implement any function or operation of the network device in the method embodiment shown in FIG. 4. The module may be entirely or partially implemented by using software, hardware, firmware, or any combination thereof.

For example, when the communication apparatus 700 is configured to implement the function of the terminal device in the method embodiment shown in FIG. 4, the transceiver unit 720 is configured to receive DCI from a network device, where the DCI carries configuration parameters corresponding to two TBs, types of the two TBs include an initially transmitted TB and a retransmitted TB, the initially transmitted TB is used to carry initially transmitted data, and the retransmitted TB is used to carry retransmitted data; and the processing unit 710 is configured to determine a type and a quantity of scheduled TBs based on the DCI, and send, to the network device, the quantity of TBs corresponding to the type.

Optionally, the configuration parameters include HARQ process numbers, the DCI carries one NDI and two HARQ process numbers that are in one-to-one correspondence with the two TBs; and the processing unit 710 is specifically configured to determine the type and the quantity of the scheduled TBs based on the NDI and the two HARQ process numbers.

Optionally, the processing unit 710 is specifically configured to: when the NDI is not toggled and the two HARQ process numbers are inconsistent, determine that the scheduled TBs are one retransmitted TB and one initially transmitted TB; when the NDI is toggled, determine that the scheduled TB is one initially transmitted TB; or when the NDI is not toggled and the two HARQ process numbers are consistent, determine that the scheduled TB is one retransmitted TB.

The processing unit 710 is specifically configured to: when the NDI is toggled and the two HARQ process numbers are inconsistent, determine that the scheduled TBs are one initially transmitted TB and one retransmitted TB; when the NDI is not toggled, determine that the scheduled TB is one retransmitted TB; or when the NDI is toggled and the two HARQ process numbers are consistent, determine that the scheduled TB is one initially transmitted TB.

Optionally, the configuration parameters include NDIs, and the DCI carries two NDIs that are in one-to-one correspondence with the two TBs; and the processing unit 710 is specifically configured to determine the type and the quantity of the scheduled TBs based on the two NDIs.

Optionally, the processing unit 710 is specifically configured to: when one of the two NDIs is toggled and the other one of the two NDIs is not toggled, determine that the scheduled TBs are one initially transmitted TB and one retransmitted TB; when neither of the two NDIs is toggled, determine that the scheduled TB is one retransmitted TB; or when the two NDIs are both toggled, determine that the scheduled TB is one initially transmitted TB.

Optionally, the configuration parameters include an MCS and an RV, and the DCI carries MCSs and RVs that correspond to the two TBs.

Optionally, a quantity of bits occupied by the MCS is 0, 2, or 5, and a quantity of bits occupied by the RV is 1 or 2.

Optionally, the transceiver unit 720 is further configured to receive an RRC message from the network device, where the RRC message indicates an assignment ratio of transmission resources assigned by the network device to the terminal device, the assignment ratio is used to divide the transmission resources into N portions of resources, N is the quantity of the scheduled TBs, each of the N portions of resources is used to transmit one corresponding TB, and N is an integer greater than or equal to 2.

Optionally, the indication of the assignment ratio in the RRC message includes: respective proportions of the N portions of resources; or the indication of the assignment ratio in the RRC message includes: respective proportions of N-1 portions of resources in the N portions of resources.

For example, when the communication apparatus 700 is configured to implement the function of the network device in the method embodiment shown in FIG. 4, the processing unit 710 is configured to generate DCI used for uplink scheduling, where the DCI carries configuration parameters corresponding to two TBs, types of the two TBs include an initially transmitted TB and a retransmitted TB, the initially transmitted TB is used to carry initially transmitted data, and the retransmitted TB is used to carry retransmitted data; and the transceiver unit 720 is configured to send the DCI to a terminal device.

Optionally, the configuration parameters include HARQ process numbers, the DCI carries one NDI and two HARQ process numbers that are in one-to-one correspondence with the two TBs, and the NDI and the two HARQ process numbers are determined based on a type and a quantity of TBs scheduled by the network device.

Optionally, when the TBs scheduled by the network device are one initially transmitted TB and one retransmitted TB, the NDI is not toggled, and the two HARQ process numbers are inconsistent; when the TB scheduled by the network device is one initially transmitted TB, the NDI is toggled; or when the TB scheduled by the network device is one retransmitted TB, the NDI is not toggled, and the two HARQ process numbers are consistent.

Optionally, when the TBs scheduled by the network device are one initially transmitted TB and one retransmitted TB, the NDI is toggled, and the two HARQ process numbers are inconsistent; when the TB scheduled by the network device is one retransmitted TB, the NDI is not toggled; or when the TB scheduled by the network device is one initially transmitted TB, the NDI is toggled, and the two HARQ process numbers are consistent.

Optionally, the configuration parameters include NDIs, the DCI carries two NDIs that are in one-to-one correspondence with the two TBs, and the two NDIs are determined based on a type and a quantity of TBs scheduled by the network device.

Optionally, when the TBs scheduled by the network device are one initially transmitted TB and one retransmitted TB, one of the two NDIs is toggled, and the other one of the two NDIs is not toggled; when the TB scheduled by the network device is one retransmitted TB, neither of the two NDIs is toggled; or when the TB scheduled by the network device is one initially transmitted TB, the two NDIs are both toggled.

Optionally, the configuration parameters include an MCS and an RV, and the DCI carries MCSs and RVs that correspond to the two TBs.

Optionally, a quantity of bits occupied by the MCS is 0, 2, or 5, and a quantity of bits occupied by the RV is 1 or 2.

Optionally, the transceiver unit 720 is further configured to send an RRC message to the terminal device, where the RRC message indicates an assignment ratio of transmission resources assigned by the network device to the terminal device, the assignment ratio is used to divide the transmission resources into N portions of resources, N is the quantity of the TBs scheduled by the network device, each of the N portions of resources is used to transmit one corresponding TB, and N is an integer greater than or equal to 2.

A more detailed description of the processing unit 710 and the transceiver unit 720 may be directly obtained by referring to the related description in the method embodiment shown in FIG. 4. Details are not described herein again.

It should be understood that division of the units in embodiments of this application is an example, and is merely logical function division. There may be other division in actual implementation. In addition, functional units in embodiments of this application may be integrated into one processor, or each of the units may exist alone physically, or two or more units are integrated into one unit. The integrated unit may be implemented in a form of hardware, or may be implemented in a form of a software functional unit.

FIG. 8 is another block diagram of a communication apparatus 800 according to an embodiment of this application. The apparatus 800 may be a chip system, or may be an apparatus configured with a chip system to implement a communication function in the foregoing method embodiments. In this embodiment of this application, the chip system may include a chip or may include a chip and another discrete component.

As shown in FIG. 8, the apparatus 800 may include a processor 810 and a communication interface 820. The communication interface 820 is configured to communicate with another device through a transmission medium, so that the apparatus 800 can communicate with another device. The communication interface 820 may be, for example, a transceiver, an interface, a bus, a circuit, or an apparatus that can implement receiving and sending functions. The processor 810 may input and output data by using the communication interface 820, and is configured to implement the data transmission method in the embodiment corresponding to FIG. 4. Specifically, the apparatus 800 may be configured to implement functions of the network device or the terminal device in the foregoing method embodiments.

For example, when the communication apparatus 800 is configured to implement the steps performed by the terminal device in the method shown in FIG. 4, the processor 810 is configured to: receive DCI from a network device, where the DCI carries configuration parameters corresponding to two TBs, types of the two TBs include an initially transmitted TB and a retransmitted TB, the initially transmitted TB is used to carry initially transmitted data, and the retransmitted TB is used to carry retransmitted data; determine a type and a quantity of scheduled TBs based on the DCI; and send, to the network device, the quantity of TBs corresponding to the type.

For example, when the communication apparatus 800 is configured to implement the steps performed by the network device in the method shown in FIG. 4, the processor 810 is configured to generate DCI used for uplink scheduling, where the DCI carries configuration parameters corresponding to two TBs, types of the two TBs include an initially transmitted TB and a retransmitted TB, the initially transmitted TB is used to carry initially transmitted data, and the retransmitted TB is used to carry retransmitted data; and send the DCI to a terminal device.

Optionally, the apparatus 800 further includes at least one memory 830, configured to store program instructions and/or data. The memory 830 is coupled to the processor 810. The coupling in this embodiment of this application may be an indirect coupling or a communication connection between apparatuses, units, or modules in an electrical form, a mechanical form, or another form, and is used for information exchange between the apparatuses, the units, or the modules. The processor 810 may cooperate with the memory 830. The processor 810 may execute the program instructions stored in the memory 830. At least one of the at least one memory may be included in the processor.

A specific connection medium between the processor 810, the communication interface 820, and the memory 830 is not limited in embodiments of this application. In this embodiment of this application, in FIG. 8, the processor 810, the communication interface 820, and the memory 830 are connected through a bus 840. The bus 840 in FIG. 8 is represented by a bold line. A connection manner between other components is merely an example for description and is not limited. The bus may be classified into an address bus, a data bus, a control bus, and the like. For ease of representation, only one bold line is used for representing the bus in FIG. 8, but this does not mean that there is only one bus or only one type of bus.

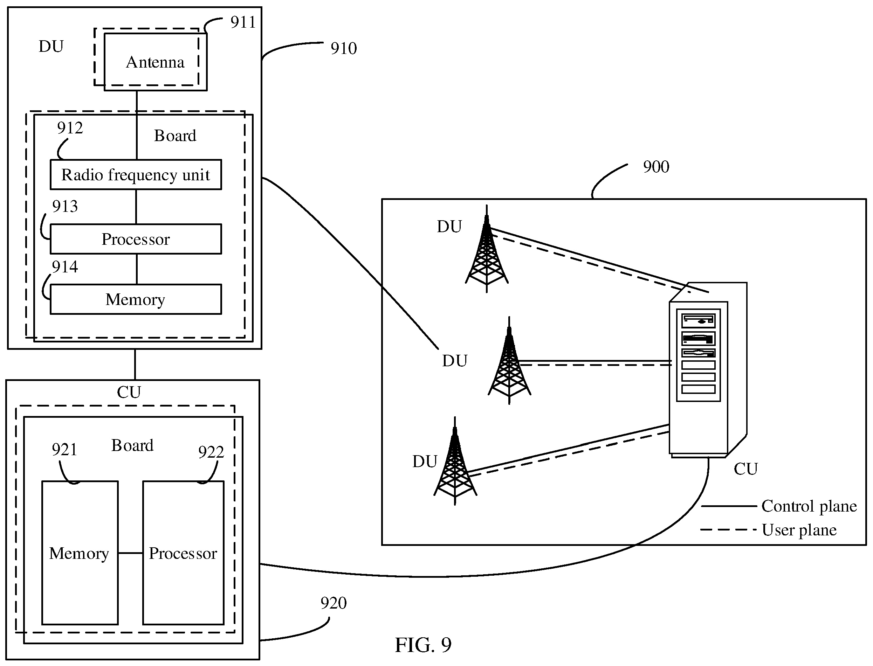

FIG. 9 is a diagram of a structure of a network device according to an embodiment of this application, for example, may be a diagram of a structure of a base station. As shown in the figure, the base station 900 may include one or more DUs 910 and one or more CUs 920. The CU 920 may communicate with a next generation core (NG core, NC) network. The DU 910 may include at least one antenna 911, at least one radio frequency unit 912, at least one processor 913, and at least one memory 914. The DU 910 is mainly configured to: receive and transmit a radio frequency signal, perform conversion between the radio frequency signal and a baseband signal, and perform partial baseband processing. The CU 920 may include at least one processor 922 and at least one memory 921. The CU 920 and the DU 910 may communicate with each other through an interface. A control plane (control plane, CP) interface may be Fs-C, for example, F1-C, and a user plane (user plane, UP) interface may be Fs-U, for example, F1-U.

The CU 920 is mainly configured to perform baseband processing, control the base station, and the like. The DU 910 and the CU 920 may be physically disposed together, or may be physically separated, that is, in a distributed base station. The CU 920 is a control center of the base station, may also be referred to as a processing unit, and is mainly configured to implement a baseband processing function. For example, the CU 920 may be configured to control the base station to perform an operation procedure related to the network device in the foregoing method embodiment.

In an instance, the CU 920 may include one or more boards, and the plurality of boards may jointly support a radio access network (for example, a 5G network) of a single access standard, or may respectively support radio access networks (for example, an LTE network, a 5G network, or another network) of different access standards. The memory 921 and the processor 922 may serve one or more boards. In other words, a memory and a processor may be disposed on each board. Alternatively, a plurality of boards may share a same memory and a same processor. In addition, a necessary circuit may be disposed on each board. The DU 910 may include one or more boards, and the plurality of boards may jointly support a radio access network (for example, a 5G network) of a single access standard, or may respectively support radio access networks (for example, an LTE network, a 5G network, or another network) of different access standards. The memory 914 and the processor 913 may serve one or more boards. In other words, a memory and a processor may be disposed on each board. Alternatively, a plurality of boards may share a same memory and a same processor. In addition, a necessary circuit may be disposed on each board.

It should be understood that, the base station 900 shown in FIG. 9 is merely a possible architecture of the network device, and shall not constitute any limitation on this application. The method provided in this application is applicable to a network device in another architecture, for example, a network device including a CU, a DU, and an active antenna unit (active antenna unit, AAU). A specific architecture of the network device is not limited in this application.

It should be understood that the base station 900 shown in FIG. 9 can implement each process related to the network device in the method embodiment shown in FIG. 4. Operations and/or functions of the modules in the base station 900 are respectively intended to implement corresponding procedures in the foregoing method embodiments. For details, refer to the descriptions in the foregoing method embodiments. To avoid repetition, detailed descriptions are properly omitted herein.

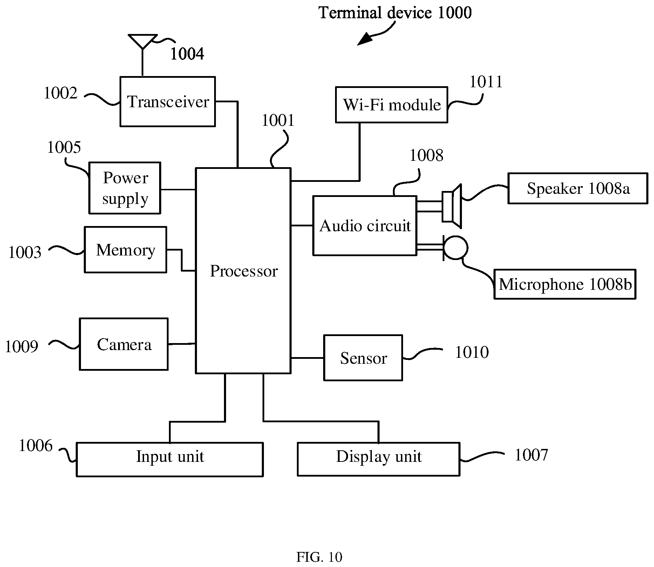

FIG. 10 is a diagram of a structure of a terminal device according to an embodiment of this application. The terminal device 1000 has a function of the terminal device shown in FIG. 4, and the terminal device 1000 may be applied to the communication system shown in FIG. 3. As shown in FIG. 10, the terminal device 1000 includes a processor 1001 and a transceiver 1002. Optionally, the terminal device 1000 further includes a memory 1003. The processor 1001, the transceiver 1002, and the memory 1003 may communicate with each other through an internal connection path, to transmit a control signal and/or a data signal. The memory 1003 is configured to store a computer program. The processor 1001 is configured to invoke the computer program from the memory 1003 and run the computer program, to control the transceiver 1002 to receive or send a signal. Optionally, the terminal device 1000 may further include an antenna 1004, configured to send, by using a radio signal, uplink data or uplink control signaling output by the transceiver 1002. Optionally, the terminal device 1000 further includes a Wi-Fi module 1011, configured to access a wireless network.

The processor 1001 and the memory 1003 may be combined into one processing apparatus, and the processor 1001 is configured to execute program code stored in the memory 1003 to implement the foregoing functions. During specific implementation, the memory 1003 may alternatively be integrated into the processor 1001, or may be independent of the processor 1001. The processor 1001 may correspond to the processing unit 710 in FIG. 7 or the processor 810 in FIG. 8.

The transceiver 1002 may correspond to the transceiver unit 720 in FIG. 7 or the communication interface 820 in FIG. 8. The transceiver 1002 may include a receiver (or referred to as a receiver machine or a receiver circuit) and a transmitter (or referred to as a transmitter machine or a transmitter circuit). The receiver is configured to receive a signal, and the transmitter is configured to transmit a signal.

Optionally, the terminal device 1000 may further include a power supply 1005, configured to supply power to various components or circuits in the terminal device 1000.

In addition, to improve functions of the terminal device, the terminal device 1000 may further include one or more of an input unit 1006, a display unit 1007, an audio circuit 1008, a camera 1009, a sensor 1010, and the like, and the audio circuit may further include a speaker 1008a, a microphone 1008b, and the like.

It should be understood that the terminal device 1000 shown in FIG. 10 can implement each process related to the terminal device in the method embodiment shown in FIG. 4. Operations and/or functions of the modules in the terminal device 1000 are respectively intended to implement corresponding procedures in the foregoing method embodiments. For details, refer to the descriptions in the foregoing method embodiments. To avoid repetition, detailed descriptions are properly omitted herein.

When the terminal device 1000 is configured to perform the operation procedure of the terminal device in the foregoing method embodiments, the processor 1001 may be configured to perform an action implemented inside the terminal device as described in the foregoing method embodiments, and the transceiver 1002 may be configured to perform an action of sending by the terminal device to the network device or receiving by the terminal device from the network device as described in the foregoing method embodiments. For details, refer to the descriptions in the foregoing method embodiments. Details are not described herein again.

This application further provides a computer program product. The computer program product includes a computer program (which may also be referred to as code or instructions). When the computer program is run, a computer is enabled to perform the method performed by the terminal device in the embodiment shown in FIG. 4 or the method performed by the network device.

This application further provides a computer-readable storage medium. The computer-readable storage medium stores a computer program (which may also be referred to as code or instructions). When the computer program is run, a computer is enabled to perform the method performed by the terminal device in the embodiment shown in FIG. 4 or the method performed by the network device.

An embodiment of this application further provides a communication system. The communication system includes the foregoing terminal device and the foregoing network device.

It should be understood that, the processor in embodiments of this application may be an integrated circuit chip, and has a signal processing capability. In an implementation process, steps in the foregoing method embodiments may be completed by a hardware integrated logic circuit in the processor or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

It should be further understood that the memory in embodiments of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), and an electrically erasable programmable read-only memory (electrically EPROM, EEPROM), or a flash memory. The volatile memory may be a random access memory (random access memory, RAM), which is used as an external cache. Through illustrative but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the system and the method described in this specification includes but is not limited to these and any other appropriate type of memory.

Terms such as "unit" and "module" used in this specification may represent computer-related entities, hardware, firmware, combinations of hardware and software, software, or software being executed. The units and the modules in embodiments of this application have a same meaning, and may be used interchangeably.

A person of ordinary skill in the art may be aware that illustrative logical blocks (illustrative logical blocks) described in embodiments disclosed in this specification and steps (steps) can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. In several embodiments provided in this application, it should be understood that the disclosed apparatus, device, and method may be implemented in other manners. For example, the foregoing apparatus embodiments are merely examples. For example, division of the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements, to achieve the objectives of the solutions in embodiments.

In addition, functional units in embodiments of this application may be integrated into one processing unit, each of the units may exist alone physically, or two or more units are integrated into one unit.

In the foregoing embodiments, all or some of the functions of the functional units may be implemented by using software, hardware, firmware, or any combination thereof. When software is used to implement the embodiments, all or some of the embodiments may be implemented in a form of a computer program product. The computer program product includes one or more computer instructions (programs). When the computer program instructions (programs) are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method (400) performed by a communication apparatus, the method comprising:
receiving (420) downlink control information, DCI, from a network device (330), wherein the DCI carries configuration parameters corresponding to two transport blocks, TBs, types of the two TBs comprise an initially transmitted TB and a retransmitted TB, the initially transmitted TB is used to carry initially transmitted data, and the retransmitted TB is used to carry retransmitted data;
determining (430) a type and a quantity of scheduled TBs based on the DCI; and
sending (440), to the network device (330), the quantity of TBs corresponding to the type;
wherein the configuration parameters comprise hybrid automatic repeat request, HARQ, process numbers, and the DCI carries one new data indicator, NDI, and two HARQ process numbers that are in one-to-one correspondence with the two TBs; and
determining (430) the type and the quantity of the scheduled TBs based on the DCI comprises:
determining the type and the quantity of the scheduled TBs based on the NDI and the two HARQ process numbers;
wherein determining (430) the type and the quantity of the scheduled TBs based on the NDI and the two HARQ process numbers comprises:
when the NDI is toggled and the two HARQ process numbers are inconsistent, determining that the scheduled TBs are one initially transmitted TB and one retransmitted TB;
when the NDI is not toggled, determining that the scheduled TB is one retransmitted TB; or
when the NDI is toggled and the two HARQ process numbers are consistent, determining that the scheduled TB is one initially transmitted TB.

2. The method (400) according to claim 1, wherein the configuration parameters comprise modulation and coding schemes, MCSs, and redundancy versions, RVs, and the DCI carries MCSs and RVs that correspond to the two TBs.

3. The method (400) according to claim 2, wherein a quantity of bits occupied by the MCS is 0, 2, or 5, and a quantity of bits occupied by the RV is 1 or 2.

4. The method (400) according to any one of claims 1 to 3, wherein the method (400) further comprises:
receiving a radio resource control, RRC, message from the network device (330), wherein the RRC message indicates an assignment ratio of transmission resources assigned by the network device (330) to a terminal device (310, 320, 1000), the assignment ratio is used to divide the transmission resources into N portions of resources, N is the quantity of the scheduled TBs, each of the N portions of resources is used to transmit one corresponding TB, and N is an integer greater than or equal to 2.

5. The method (400) according to claim 4, wherein the indication of the assignment ratio in the RRC message comprises: respective proportions of the N portions of resources; or
the indication of the assignment ratio in the RRC message comprises: respective proportions of N-1 portions of resources in the N portions of resources.

6. A communication apparatus (700, 800), comprising units configured to implement the method (400) according to any one of claims 1 to 5.

7. A computer-readable storage medium, wherein the storage medium stores a computer program or instructions, and when the computer program or the instructions are executed by a computer, the method (400) according to any one of claims 1 to 5 is implemented.

8. A computer program product, wherein the computer program product comprises instructions, and when the instructions are run by a computer, the method (400) according to any one of claims 1 to 5 is implemented.

## Patentansprüche

1. Datenübertragungsverfahren (400), das durch eine Kommunikationseinrichtung durchgeführt wird, wobei das Verfahren Folgendes umfasst:
Empfangen (420) von Downlink-Steuerungsinformationen, DCI, aus einer Netzwerkvorrichtung (330), wobei die DCI Konfigurationsparameter entsprechend zwei Transportblöcken, TBs, enthalten, Typen der zwei TBs einen anfänglich übertragenen TB und einen erneut übertragenen TB umfassen, der anfänglich übertragene TB verwendet wird, um anfänglich übertragene Daten zu enthalten, und der erneut übertragene TB verwendet wird, um erneut übertragene Daten zu enthalten;
Bestimmen (430) eines Typs und einer Menge von geplanten TBs basierend auf den DCI; und
Senden (440) der Menge von TBs entsprechend dem Typ an die Netzwerkvorrichtung (330);
wobei die Konfigurationsparameter Prozessnummern der hybriden automatischen Wiederholungsanforderung, HARQ-Prozessnummern, umfassen, und die DCI einen neuen Datenindikator, NDI, und zwei HARQ-Prozessnummern enthalten, die in einer Eins-zu-Eins-Entsprechung zu den zwei TBs stehen; und
das Bestimmen (430) des Typs und der Menge der geplanten TBs basierend auf dem DCI Folgendes umfasst:
Bestimmen des Typs und der Menge der geplanten TBs basierend auf dem NDI und den zwei HARQ-Prozessnummern;
wobei das Bestimmen (430) des Typs und der Menge der geplanten TBs basierend auf dem NDI und den zwei HARQ-Prozessnummern Folgendes umfasst:
wenn der NDI umgeschaltet ist und die zwei HARQ-Prozessnummern inkonsistent sind, Bestimmen, dass die geplanten TBs ein anfänglich übertragener TB und ein erneut übertragener TB sind;
wenn der NDI nicht umgeschaltet ist, Bestimmen, dass der geplante TB ein erneut übertragener TB ist; oder
wenn der NDI umgeschaltet ist und die zwei HARQ-Prozessnummern konsistent sind, Bestimmen, dass der geplante TB ein anfänglich übertragener TB ist.

2. Verfahren (400) nach Anspruch 1, wobei die Konfigurationsparameter Modulations- und Codierungsschemata, MCSs, und Redundanzversionen, RVs, umfassen, und die DCI MCSs und RVs enthalten, die den zwei TBs entsprechen.

3. Verfahren (400) nach Anspruch 2, wobei eine Menge von Bits, die durch das MCS belegt ist, 0, 2 oder 5 beträgt und eine Menge von Bits, die durch die RV belegt ist, 1 oder 2 beträgt.

4. Verfahren (400) nach einem der Ansprüche 1 bis 3, wobei das Verfahren (400) ferner Folgendes umfasst:
Empfangen einer Funkressourcensteuerungsnachricht, RRC-Nachricht, aus der Netzwerkvorrichtung (330), wobei die RRC-Nachricht ein Zuweisungsverhältnis von Übertragungsressourcen, die einer Endgerätevorrichtung (310, 320, 1000) durch die Netzwerkvorrichtung (330) zugewiesen sind, angibt, das Zuweisungsverhältnis verwendet wird, um die Übertragungsressourcen in N Ressourcenabschnitte aufzuteilen, N die Menge der geplanten TBs ist, jeder der N Ressourcenabschnitte verwendet wird, um einen entsprechenden TB zu übertragen, und N eine ganze Zahl größer oder gleich 2 ist.

5. Verfahren (400) nach Anspruch 4, wobei die Angabe des Zuweisungsverhältnisses in der RRC-Nachricht Folgendes umfasst:
jeweilige Anteile der N Ressourcenabschnitte; oder
die Angabe des Zuweisungsverhältnisses in der RRC-Nachricht Folgendes umfasst: jeweilige Anteile von N-1 Ressourcenabschnitten in den N Ressourcenabschnitten.

6. Kommunikationseinrichtung (700, 800), umfassend Einheiten, die dazu konfiguriert sind, das Verfahren (400) nach einem der Ansprüche 1 bis 5 zu implementieren.

7. Computerlesbares Speichermedium, wobei das Speichermedium ein Computerprogramm oder Anweisungen speichert, und, wenn das Computerprogramm oder die Anweisungen durch einen Computer ausgeführt werden, das Verfahren (400) nach einem der Ansprüche 1 bis 5 implementiert wird.

8. Computerprogrammprodukt, wobei das Computerprogrammprodukt Anweisungen umfasst, und, wenn die Anweisungen durch einen Computer ausgeführt werden, das Verfahren (400) nach einem der Ansprüche 1 bis 5 implementiert wird.

## Revendications

1. Procédé de transmission de données (400) réalisé par un appareil de communication, le procédé comprenant :
la réception (420) d'informations de commande de liaison descendante, DCI, à partir d'un dispositif de réseau (330), dans lequel les DCI transportent des paramètres de configuration correspondant à deux blocs de transport, TB, les types des deux TB comprennent un TB initialement transmis et un TB retransmis, le TB initialement transmis est utilisé pour transporter les données initialement transmises et le TB retransmis est utilisé pour transporter les données retransmises ;
la détermination (430) d'un type et d'une quantité de TB programmés sur la base des DCI ; et
l'envoi (440), au dispositif de réseau (330), de la quantité de TB correspondant au type ;
dans lequel les paramètres de configuration comprennent une demande de répétition automatique hybride, HARQ, des numéros de processus, et les DCI transportent un nouvel indicateur de données, NDI, et deux numéros de processus HARQ qui sont en correspondance biunivoque avec les deux TB ; et
la détermination (430) du type et de la quantité des TB programmés sur la base des DCI comprend :
la détermination du type et de la quantité des TB programmés sur la base du NDI et des deux numéros de processus HARQ ;
dans lequel la détermination (430) du type et de la quantité des TB programmés sur la base du NDI et des deux numéros de processus HARQ comprend :
lorsque le NDI est basculé et que les deux numéros de processus HARQ sont incohérents, la détermination que les TB programmés sont un TB initialement transmis et un TB retransmis ;
lorsque le NDI n'est pas basculé, la détermination que le TB programmé est un TB retransmis ; ou
lorsque le NDI est basculé et que les deux numéros de processus HARQ sont cohérents, la détermination que le TB programmé est un TB initialement transmis.

2. Procédé (400) selon la revendication 1, dans lequel les paramètres de configuration comprennent des schémas de modulation et de codage, MCS, et des versions de redondance, RV, et les DCI transportent des MCS et des RV qui correspondent aux deux TB.

3. Procédé (400) selon la revendication 2, dans lequel une quantité de bits occupés par le MCS est de 0, 2 ou 5, et une quantité de bits occupés par la RV est de 1 ou 2.

4. Procédé (400) selon l'une quelconque des revendications 1 à 3, dans lequel le procédé (400) comprend en outre :
la réception d'un message de commande de ressources radio, RRC, à partir du dispositif de réseau (330), dans lequel le message RRC indique un rapport d'attribution de ressources de transmission attribuées par le dispositif de réseau (330) à un dispositif terminal (310, 320, 1000), le rapport d'attribution est utilisé pour diviser les ressources de transmission en N portions de ressources, N est la quantité des TB programmés, chacune des N portions de ressources est utilisée pour transmettre un TB correspondant, et N est un entier supérieur ou égal à 2.

5. Procédé (400) selon la revendication 4, dans lequel l'indication du rapport d'attribution dans le message RRC comprend : les proportions respectives des N portions de ressources ; ou
l'indication du rapport d'attribution dans le message RRC comprend : les proportions respectives de N-1 portions de ressources dans les N portions de ressources.

6. Appareil de communication (700, 800) comprenant des unités configurées pour mettre en œuvre le procédé (400) selon l'une quelconque des revendications 1 à 5.

7. Support de stockage lisible par ordinateur, dans lequel le support de stockage stocke un programme informatique ou des instructions, et lorsque le programme informatique ou les instructions sont exécutés par un ordinateur, le procédé (400) selon l'une quelconque des revendications 1 à 5 est mis en œuvre.

8. Produit de programme informatique, dans lequel le produit de programme informatique comprend des instructions, et lorsque les instructions sont exécutées par un ordinateur, le procédé (400) selon l'une quelconque des revendications 1 à 5 est mis en œuvre.
